(19) Europäisches Patentamt
European Patent Office
Office européen des brevets

(11) EP 4 491 678 A2

(12) # EUROPEAN PATENT APPLICATION

(43) Date of publication:
**15.01.2025 Bulletin 2025/03**

(21) Application number: **24202025.3**

(22) Date of filing: **13.07.2017**

(51) International Patent Classification (IPC):
***C09D 5/00*** *(2006.01)*

(52) Cooperative Patent Classification (CPC):
**C09D 5/02; C09D 5/00; C09D 5/002**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.07.2016 US 201662362729 P**

(62) Document number(s) of the earlier application(s) in accordance with Art. 76 EPC:
**22164086.5 / 4 086 314**
**17748971.3 / 3 484 964**

(71) Applicant: **SWIMC LLC**
**Cleveland, OH 44115 (US)**

(72) Inventors:
- **O'BRIEN, Robert M.**
  **Monongahela (US)**
- **STUETELBERG, Mark**
  **Hiawatha (US)**
- **RIAZZI, Arthur**
  **Harrison City (US)**
- **SCANDOLARI, Mary Jo**
  **Coraopolis (US)**
- **HUYNH, Nhan T.**
  **W. Homestead (US)**
- **KOCH, Nikolaus J.**
  **Greensburg (US)**
- **PUAUD, Samuel**
  **Lille (FR)**
- **RIDDLE, David M.**
  **Valencia (US)**

(74) Representative: **Vossius & Partner**
**Patentanwälte Rechtsanwälte mbB**
**Siebertstrasse 3**
**81675 München (DE)**

Remarks:
•This application was filed on 23.09.2024 as a divisional application to the application mentioned under INID code 62.
•Claims filed after the date of filing of the application / after the date of receipt of the divisional application (Rule 68(4) EPC)

(54) # LATEX COATING COMPOSITION HAVING REDUCED FLAVOR SCALPING PROPERTIES

(57) A coating composition for a food or beverage can includes an emulsified latex polymer formed by polymerizing an ethylenically unsaturated monomer component in the presence of an aqueous dispersion of a water-dispersible emulsifying polymer.

EP 4 491 678 A2

## Description

### CROSS-REFERENCE TO RELATED APPLICATION

This application claims priority from U.S. provisional application Serial No. 62/362,729 filed July 15, 2016 and entitled LATEX COATING COMPOSITION HAVING REDUCED FLAVOR SCALPING PROPERTIES, the disclosure of which is incorporated herein by reference.

### FIELD

This disclosure concerns coating compositions, including latex emulsion coating compositions, which may be used to form coatings (e.g., spray coatings) for food and beverage containers, and for other packaging articles.

### BACKGROUND

A wide variety of coating compositions have been used to coat the surfaces of food and beverage cans and other packaging articles. For example, metal cans are sometimes coated using "coil coating" or "sheet coating" operations in which a planar coil or sheet of a suitable substrate *(e.g.,* steel or aluminum metal) is coated with a suitable composition and then cured or otherwise hardened. The coated substrate then is formed into the can end or body. Alternatively, liquid coating compositions may be applied by a variety of measures including spraying, dipping, rolling, etc. to the formed article and then cured or otherwise hardened

Packaging coatings should preferably be capable of high-speed application to the substrate and provide the necessary properties when hardened to perform in this demanding end use. For example, the coating should be safe for food contact, have excellent adhesion to the substrate, have sufficient flexibility to withstand deflection of the underlying substrate without rupturing *(e.g.,* during fabrication steps or due to damage occurring during transport or use of the packaging article), and resist degradation over long periods of time, even when exposed to harsh environments. Coatings that will be subjected to post-curing deformation, such as the coatings applied to can or end preforms that will be subsequently cured and formed into a final shape, require particularly good flexibility so that the applied coating remains intact on the substrate after deformation.

Many current packaging coatings contain mobile or bound bisphenol A ("BPA"), bisphenol F ("BPF"), bisphenol S ("BPS"), aromatic glycidyl ether compounds thereof *(e.g.,* the diglycidyl ether of BPA, BPF, or BPS) or polyvinyl chloride ("PVC") compounds. Although the balance of scientific evidence available to date indicates that trace amounts of these compounds that might be released from existing coatings do not pose health risks to humans, these compounds are nevertheless perceived by some consumers as being potentially harmful to human health.

In addition, coating compositions used for food and beverage applications should resist and not cause "flavor scalping". Flavor scalping represents a loss of quality in a packaged item due either to its aroma or other flavor components being absorbed by the packaging or due to a food or beverage contained in the packaging absorbing undesirable aromas or other flavor components from the packaging.

From the foregoing, it will be appreciated that what is needed in the art is a packaging container *(e.g.,* a food or beverage can or a portion thereof) that is coated with a composition that does not contain extractible quantities of objectionable compounds, that can undergo challenging application and curing processes to produce a film with required adhesion and flexibility, and which does not cause objectionable flavor scalping.

### SUMMARY

Some researchers in the packaging field have proposed that increases in coating Tg will contribute to improved resistance to flavor scalping. However, because of the need to satisfy other requirements for interior container coatings, such as sprayability, flexibility, absence of blisters and blushing, resistance to fracture and corrosion, resistance to product ingredients and avoidance of carbonation loss, increasing the Tg of a packaging film sufficiently to achieve acceptable flavor scalping resistance has not been feasible. As the polymer Tg is increased, atomization, substrate coverage, flexibility and blister resistance tend to be sacrificed. The present invention provides a high Tg polymer that addresses flavor scalping concerns but maintains expected application and film performance characteristics for interior spray coatings in two-piece metal cans.

The present invention provides in one aspect a food or beverage can coating composition that includes an emulsified latex polymer (*viz.*, an emulsion polymerized latex polymer made in the presence of an emulsifying polymer having a specified minimum molecular weight), wherein a cured film of the coating composition has a specified minimum glass transition temperature (Tg) and the coating composition is substantially free of each of bisphenol A, bisphenol F, and bisphenol S, including epoxides thereof. The emulsified latex polymer may be formed by combining an ethylenically

unsaturated monomer component with an aqueous dispersion of an emulsifying polymer having a number average molecular weight (Mn) of at least about 8,500, and then polymerizing the ethylenically unsaturated monomer component in the presence of the emulsifying polymer to form an emulsified latex polymer that upon drying or otherwise curing will provide a cured or otherwise hardened coating film having a Tg of at least about 40° C. The ethylenically unsaturated monomer component may be added to the aqueous emulsifying polymer dispersion incrementally, in a batch addition, or in a combination thereof *(e.g.,* a semi-batch addition). For brevity, the polymer formed by such ethylenically unsaturated monomer component may be referred to as the "component polymer". In the emulsified latex polymer, the emulsifying polymer appears to be sufficiently bound *(e.g.,* covalently or ionically bound) to the component polymer, or otherwise sufficiently complexed or entangled with the component polymer, so as not be extractible from the cured coating film. Without intending to be bound by theory, the emulsified latex polymer may be said to have a multistage polymer morphology, but is not believed to have a conventional core-shell structure. The disclosed emulsifying polymer may, in a manner like that of a conventional core polymer, be provided or formed prior to formation of the component polymer. However, in a manner more like that of a conventional shell polymer, the emulsifying polymer may following formation of the component polymer serve as a hydrophilic interface between the emulsified latex polymer and an aqueous dispersing medium.

The ethylenically unsaturated monomer component is preferably a mixture of monomers. In some embodiments, at least one of the monomers in the mixture is preferably a (meth)acrylate monomer, and at least one monomer is preferably an oxirane-functional monomer. More preferably, at least one of the monomers in the mixture is an oxirane-functional alpha, beta-ethylenically unsaturated monomer. In certain embodiments, the oxirane functional group-containing monomer is present in the ethylenically unsaturated monomer component in an amount of at least 0.1 wt. %, based on the weight of the monomer mixture. In certain embodiments, the oxirane functional group-containing monomer is present in the ethylenically unsaturated monomer component in an amount of no greater than 30 wt. %, based on the weight of the monomer mixture.

The emulsifying polymer may be a salt of an acid- or anhydride-functional polymer *(viz.,* an acid group- or anhydride group-containing polymer) and an amine, preferably a tertiary amine. In other embodiments, the emulsifying polymer is a polymer having salt-forming groups that are groups other than acid or anhydride groups (e.g., anionic salt groups or cationic salt groups that facilitate formation of a stable aqueous dispersion, and salt-forming groups that yield an anionic or cationic salt group when neutralized with a suitable acid or base) or that are formed using neutralizing agents other than amines. In other embodiments the emulsifying polymer contains non-ionic water-dispersing groups *(e.g.,* polyoxyethylene groups) that facilitate formation of a stable aqueous dispersion.

The invention also provides a method of preparing a coated food or beverage can, or a portion thereof. The method includes forming a composition that includes an emulsified latex polymer, including: forming an aqueous dispersion of an emulsifying polymer having an Mn of at least about 8,500 in a carrier comprising water and an optional organic solvent; combining an ethylenically unsaturated monomer component with the aqueous dispersion; polymerizing the ethylenically unsaturated monomer component in the presence of the aqueous dispersion to form an emulsified latex polymer that can provide a cured coating film having a Tg of at least about 40° C; and applying the composition including the emulsified latex polymer to a metal substrate prior to or after forming the metal substrate into a food or beverage can or portion thereof. The ethylenically unsaturated monomer component and emulsifying polymer are as described above. In certain embodiments, the method can include removing at least a portion of the organic solvent, if present, from the aqueous dispersion after polymerization and before applying the composition to a metal substrate.

In certain embodiments, applying the composition to such metal substrate includes applying the composition to a metal substrate in the form of a planar coil or sheet, hardening the emulsified latex polymer, and forming the substrate into a food or beverage can or portions thereof. In other embodiments, applying the composition to such metal substrate comprises applying the composition to the metal substrate after the metal substrate has been formed into a can or portion thereof.

In certain embodiments, forming the substrate into a can or portion thereof includes forming the substrate into a can end or a can body. In certain embodiments, the can is a two-piece drawn food can, three-piece food can, food can end, drawn and ironed food or beverage can, beverage can end, and the like. The metal substrate can, for example, be steel or aluminum.

In certain embodiments, the disclosed coating composition contains one or more crosslinkers, fillers, catalysts, dyes, pigments, toners, extenders, lubricants, anticorrosion agents, flow control agents, thixotropic agents, dispersing agents, antioxidants, adhesion promoters, light stabilizers, organic solvents, surfactants or combinations thereof to provide desired film properties.

In certain embodiments, the composition is substantially free of mobile BPA, mobile BPF and mobile BPS. In preferred embodiments the composition is essentially free of these mobile compounds, even more preferably essentially completely free of these mobile compounds, and most preferably completely free of these mobile compounds. In additional embodiments, the composition is substantially free of bound BPA, bound BPF and bound BPS. In preferred embodiments the composition is essentially free of these bound compounds, even more preferably essentially completely

free of these bound compounds, and most preferably completely free of these bound compounds. In addition, the coating composition is preferably substantially free, essentially free, essentially completely free, or completely free of structural units derived from a dihydric phenol, or other polyhydric phenol, having estrogenic agonist activity great than or equal to that of 4,4'-(propane-2,2-diyl)diphenol. More preferably, the coating composition is substantially free or completely free of any structural units derived from a dihydric phenol, or other polyhydric phenol, having estrogenic agonist activity greater than or equal to that of BPS. In some embodiments, the coating composition is substantially free or completely free of any structural units derived from a bisphenol. In some embodiments, the latex polymer or the coating composition is epoxy-free, *e.g.,* free of polyaromatic polyepoxides.

In certain embodiments, the emulsifying polymer includes an acid- or anhydride-functional acrylic polymer, acid- or anhydride-functional alkyd polymer, acid- or anhydride-functional polyester polymer, acid- or anhydride-functional polyurethane polymer, acid- or anhydride-functional polyolefin polymer, or combination thereof. Preferably, the emulsifying polymer includes an acid-functional acrylic polymer. In some embodiments, the emulsifying polymer is neutralized with a tertiary amine, for example a tertiary amine selected from the group consisting of trimethyl amine, dimethylethanol amine (also known as dimethylamino ethanol), methyldiethanol amine, triethanol amine, ethyl methyl ethanol amine, dimethyl ethyl amine, dimethyl propyl amine, dimethyl 3-hydroxy- 1-propyl amine, dimethylbenzyl amine, dimethyl 2-hydroxy-1-propyl amine, diethyl methyl amine, dimethyl 1-hydroxy-2-propyl amine, triethyl amine, tributyl amine, N-methyl morpholine, and mixtures thereof. Preferably, the emulsifying polymer is at least 25% neutralized with the amine in water.

In certain embodiments, the ethylenically unsaturated monomer component is polymerized in the presence of the aqueous dispersion with a water-soluble free radical initiator at a temperature of 0° C to 100° C. In certain embodiments, the free radical initiator includes a peroxide initiator. In certain embodiments, the free radical initiator includes hydrogen peroxide and benzoin. Alternatively, in certain embodiments the free radical initiator includes a redox initiator system.

The present invention also provides food cans and beverage cans prepared by a method described herein. In one embodiment, the present invention provides a food or beverage can that includes: one or more of a body portion or an end portion including a metal substrate; and a coating composition disposed thereon, wherein the coating composition includes the above-described emulsified latex polymer dispersed in water.

DEFINITIONS

Unless otherwise specified, the following terms as used herein have the meanings provided below.

**The** terms "a," "an," "the," "at least one," and "one or more" are used interchangeably. Thus, for example, a coating composition that comprises "a" polymer means that the coating composition includes "one or more" polymers.

The term "aliphatic group" means a saturated or unsaturated linear or branched hydrocarbon group. This term is used to encompass alkyl, alkenyl, and alkynyl groups, for example. The term "alkyl group" means a saturated linear or branched hydrocarbon group including, for example, methyl, ethyl, isopropyl, t-butyl, heptyl, dodecyl, octadecyl, amyl, 2-ethylhexyl, and the like. The term "alkenyl group" means an unsaturated, linear or branched hydrocarbon group with one or more carbon-carbon double bonds, such as a vinyl group. The term "alkynyl group" means an unsaturated, linear or branched hydrocarbon group with one or more carbon-carbon triple bonds. The term "cyclic group" means a closed ring hydrocarbon group that is classified as an alicyclic group or an aromatic group, both of which can include heteroatoms. The term "alicyclic group" means a cyclic hydrocarbon group having properties resembling those of aliphatic groups.

The term "Ar" refers to a divalent aryl group (*viz.*, an arylene group), which refers to a closed aromatic ring or ring system such as phenylene, naphthylene, biphenylene, fluorenylene, and indenyl, as well as heteroarylene groups (viz., a closed ring hydrocarbon in which one or more of the atoms in the ring is an element other than carbon (*e.g.*, nitrogen, oxygen, sulfur, etc.)). Suitable heteroaryl groups include furyl, thienyl, pyridyl, quinolinyl, isoquinolinyl, indolyl, isoindolyl, triazolyl, pyrrolyl, tetrazolyl, imidazolyl, pyrazolyl, oxazolyl, thiazolyl, benzofuranyl, benzothiophenyl, carbazolyl, benzoxazolyl, pyrimidinyl, benzimidazolyl, quinoxalinyl, benzothiazolyl, naphthyridinyl, isoxazolyl, isothiazolyl, purinyl, quinazolinyl, pyrazinyl, 1-oxidopyridyl, pyridazinyl, triazinyl, tetrazinyl, oxadiazolyl, thiadiazolyl, and so on. When such groups are divalent, they are typically referred to as "heteroarylene" groups (*e.g.*, furylene, pyridylene, etc.)

The term "bisphenol" refers to a polyhydric polyphenol having two phenylene groups that each include six-carbon rings and a hydroxyl group attached to a carbon atom of the ring, wherein the rings of the two phenylene groups do not share any atoms in common.

The term "comprises" and variations thereof do not have a limiting meaning where these terms appear in the description and claims.

The term "crosslinker" refers to a molecule capable of forming a covalent linkage between polymers or between two different regions of the same polymer.

The term "epoxy-free", when used herein in the context of a polymer, refers to a polymer that does not include any epoxy backbone segments. Thus, for example, a polymer made from ingredients including an epoxy resin would not be considered epoxy-free. Similarly, a polymer having backbone segments that are the reaction product of a bisphenol *(e.g.,*

BPA, BPF, BPS, 4,4'dihydroxy bisphenol, etc.) and a halohydrin *(e.g.,* epichlorohydrin) would not be considered epoxy-free.

The term "emulsified latex polymer" refers to a particulate polymeric material stably dispersed in an aqueous medium, preferably without requiring the presence of non-polymeric surfactants to be so dispersed.

The terms "emulsifying polymer" and "polymeric emulsifier" refer to a polymer having at least one hydrophobic portion (e.g., at least one alkyl, cycloalkyl or aryl portion) and at least one hydrophilic portion (e.g., at least one water-dispersing group).

The term "food-contact surface" refers to a surface of an article (e.g., a food or beverage container) that is in contact with, or suitable for contact with, a food or beverage product.

A group that may be the same or different is referred to as being "independently" something. Substitution on the organic groups of compounds used in the present invention is contemplated. As a means of simplifying the discussion and recitation of certain terminology used throughout this application, the terms "group" and "moiety" are used to differentiate between chemical species that allow for substitution or that may be substituted and those that do not allow or may not be so substituted. Thus, when the term "group" is used to describe a chemical substituent, the described chemical material includes the unsubstituted group and that group with O, N, Si, or S atoms, for example, in the chain (as in an alkoxy group) as well as carbonyl groups or other conventional substitution. Where the term "moiety" is used to describe a chemical compound or substituent, only an unsubstituted chemical material is intended to be included. For example, the phrase "alkyl group" is intended to include not only pure open chain saturated hydrocarbon alkyl substituents, such as methyl, ethyl, propyl, t-butyl, and the like, but also alkyl substituents bearing further substituents known in the art, such as hydroxy, alkoxy, alkylsulfonyl, halogen atoms, cyano, nitro, amino, carboxyl, etc. Thus, "alkyl group" includes ether, haloalkyl, nitroalkyl, carboxyalkyl, hydroxyalkyl, sulfoalkyl and like groups. On the other hand, the phrase "alkyl moiety" is limited to the inclusion of only pure open chain saturated hydrocarbon alkyl substituents, such as methyl, ethyl, propyl, t-butyl, and the like. As used herein, the term "group" is intended to be a recitation of both the particular moiety, as well as a recitation of the broader class of substituted and unsubstituted structures that includes the moiety.

The term "latex polymer" refers to a dispersion or emulsion of polymer particles formed in the presence of water and one or more secondary dispersing or emulsifying agents (e.g., the above-mentioned emulsifying polymer, a surfactant, or mixtures thereof) whose presence is required to form the dispersion or emulsion. The secondary dispersing or emulsifying agent is normally separate from the polymer after polymer formation, but may, as in the emulsified latex polymer embodiments disclosed herein, become or appear to become part of the emulsified latex polymer particles as they are formed.

Unless otherwise indicated, a reference to a "(meth)acrylate" compound (where "meth" is in parenthesis) is meant to include acrylate, methacrylate or both compounds.

The term "mobile" when used with respect to a compound means that the compound can be extracted from a cured composition when the cured composition (typically at a coating weight of about 1 $mg/cm^2$) is exposed to a test medium for some defined set of conditions, depending on the end use. An example of these testing conditions is exposure of the cured coating to HPLC-grade acetonitrile for 24 hours at 25° C.

The term "multi-coat coating system" refers to a coating system that includes at least two layers. In contrast, a "mono-coat coating system" as used herein refers to a coating system that includes only a single layer.

The term "on" when used in the context of a coating applied on a surface or substrate, includes both coatings applied directly and coatings applied indirectly to the surface or substrate. Thus, for example, a coating applied to an undercoat layer overlying a substrate constitutes a coating applied on the substrate.

The term "organic group" means a hydrocarbon group (with optional elements other than carbon and hydrogen, such as oxygen, nitrogen, sulfur, and silicon) that is classified as an aliphatic group, cyclic group, or combination of aliphatic and cyclic groups (e.g., alkaryl and aralkyl groups).

The term "phenylene" as used herein refers to a six-carbon atom aryl ring (e.g., as in a benzene group) that can have any substituent groups (including, e.g., halogen atoms, oxygen atoms, hydrocarbon groups, hydroxyl groups, and the like). Thus, for example, the following aryl groups are each phenylene rings: $-C_6H_4-$, $-C_6H_3(CH_3)-$, and $-C_6H(CH_3)_2Cl-$. In addition, for example, each of the aryl rings of a naphthalene group is a phenylene ring.

The term "polymer" includes both homopolymers and copolymers (e.g., polymers of two or more different monomers).

The terms "preferred" and "preferably" refer to embodiments of the invention that may afford certain benefits, under certain circumstances. However, other embodiments may also be preferred, under the same or other circumstances. Furthermore, the recitation of one or more preferred embodiments does not imply that other embodiments are not useful, and is not intended to exclude other embodiments from the scope of the invention.

When used with respect to a coating composition or a hardened or cured coating, the term "substantially free" of a particular bound or mobile compound means that the composition or coating contains less than 1000 parts per million (ppm) of the recited compound. Similarly, the term "essentially free" of a particular bound or mobile compound means that the composition or coating contains less than 100 parts per million (ppm) of the recited compound; the term "essentially

completely free" of a particular bound or mobile compound means that the composition or coating contains less than 5 parts per million (ppm) of the recited compound; and the term "completely free" of a particular bound or mobile compound means that the composition or coating contains less than 20 parts per billion (ppb) of the recited compound. If the aforementioned phrases are used without the term "mobile" (e.g., "substantially free of XYZ compound") then the disclosed compositions and coatings contain less than the aforementioned compound amounts whether the compound is mobile in the hardened or cured coating or bound to a constituent of the hardened or cured coating.

The term "water-dispersing groups" refers to groups that aid dispersal or dissolution of a polymer bearing such groups into aqueous media. The term accordingly encompasses water-solubilizing groups.

A "water-dispersible" polymer means a polymer which is capable of being combined by itself with water, without requiring the use of a secondary dispersing or emulsifying agent, to obtain an aqueous dispersion or emulsion of polymer particles having at least a one month shelf stability at normal storage temperatures.

The recitation of numerical ranges by endpoints includes all numbers subsumed within that range *(e.g.,* 1 to 5 includes 1, 1.5, 2, 2.75, 3, 3.80, 4, 5, etc.).

The above summary of the present invention is not intended to describe each disclosed embodiment or every implementation of the present invention. The description that follows more particularly exemplifies illustrative embodiments. In several places throughout the application, guidance is provided through lists of examples, which examples can be used in various combinations. In each instance, the recited list serves only as a representative group and should not be interpreted as an exclusive list.

## DETAILED DESCRIPTION OF ILLUSTRATIVE EMBODIMENTS

The disclosed ethylenically unsaturated monomer component can employ a variety of monomers. Preferred monomers are capable of free radical initiated polymerization in an aqueous medium. The ethylenically unsaturated monomer component preferably contains a mixture of monomers, preferably contains at least one oxirane-functional ethylenically unsaturated monomer (*e.g.*, at least 0.1 wt. %, more preferably at least 1 wt. %. and even more preferably at least 2 wt. % oxirane-functional ethylenically unsaturated monomer), and more preferably contains at least one oxirane-functional alpha, beta-ethylenically unsaturated monomer. The presence of at least 0.1 wt. % of such oxirane-functional monomer may contribute to stability of the latex. The oxirane-functional monomer may also contribute to crosslinking in the dispersed particles and during cure, resulting in better properties of coating compositions formulated with the polymeric latices. The ethylenically unsaturated monomer component preferably contains no greater than 30 wt. %, more preferably no greater than 25 wt. %, even more preferably no greater than 20 wt. %, and optimally no greater than 15 wt. %, of the oxirane-functional monomer, based on the weight of the monomer mixture. Typically, greater than 30 wt. % of the oxirane-functional monomer in the monomer mixture can contribute to diminished film properties. Although not intended to be limited by theory, it is believed that this is due to embrittlement caused by an overabundance of crosslinking. In some embodiments, the monomer mixture includes more than 1 wt. %, more than 2 wt. %, more than 3 wt. %, or 5 or more wt. % of oxirane functional group-containing monomer.

Suitable oxirane-functional ethylenically unsaturated monomers include monomers having a reactive carbon-carbon double bond and an oxirane (viz., a glycidyl) group. Typically, the monomer is a glycidyl ester of an alpha, beta-unsaturated acid, or anhydride thereof (*viz.*, an oxirane-functional alpha, beta-ethylenically unsaturated monomer). Suitable alpha, beta-unsaturated acids include monocarboxylic acids and dicarboxylic acids. Examples of such carboxylic acids include, but are not limited to, acrylic acid, methacrylic acid, alpha-chloroacrylic acid, alpha-cyanoacrylic acid, beta-methylacrylic acid (crotonic acid), alpha-phenyl acrylic acid, beta-acryloxypropionic acid, sorbic acid, alpha-chlorosorbic acid, angelic acid, cinnamic acid, p-chlorocinnamic acid, beta-stearylacrylic acid, itaconic acid, citraconic acid, mesaconic acid, glutaconic acid, aconitic acid, maleic acid, fumaric acid, tricarboxyethylene, maleic anhydride, and mixtures thereof.

Specific examples of suitable monomers containing a glycidyl group are glycidyl (meth)acrylate *(viz.,* glycidyl methacrylate and glycidyl acrylate), mono- and di-glycidyl itaconate, mono- and di-glycidyl maleate, and mono- and di-glycidyl formate. Allyl glycidyl ether and vinyl glycidyl ether may also be used as the oxirane-functional monomer. Preferred monomers are glycidyl acrylate ("GA") and glycidyl methacrylate ("GMA"), with GMA being particularly preferred in some embodiments.

The oxirane-functional ethylenically unsaturated monomer preferably reacts via a site of ethylenic unsaturation *(e.g.,* via a vinyl group) with suitable other monomers within the ethylenically unsaturated component. Such other monomers include, for example, (meth)acrylates *(e.g.,* alkyl, cycloalkyl or aryl (meth)acrylates), vinyl monomers, alkyl esters of maleic or fumaric acid, and the like. Suitable (meth)acrylates include those having the formula $CH_2=C(R^1)-CO-OR^2$ wherein $R^1$ is hydrogen or methyl, and $R^2$ is an alkyl, cycloalkyl or aryl group preferably containing one to sixteen carbon atoms. The $R^2$ group can be substituted with one or more, and typically one to three, moieties such as hydroxy, halo, phenyl, and alkoxy moieties. Suitable (meth)acrylates therefore encompass hydroxyl-functional (meth)acrylates, such as, for example, hydroxyl-functional alkyl (meth)acrylates. In preferred embodiments, the ethylenically unsaturated monomer component includes at least one alkyl (meth)acrylate.

In some embodiments, a substantial portion (e.g., at least 10 wt. %, at least 20 wt. %, or at least 30 wt. %) of the ethylenically unsaturated monomer component constitutes one or more (meth)acrylates, more preferably one or more alkyl (meth)acrylates. In some embodiments, up to about 50 wt. %, up to about 40 wt. %, or up to about 35 wt. % of the ethylenically unsaturated monomer component constitutes one or more such (meth)acrylate. The (meth)acrylate typically is an ester of acrylic or methacrylic acid. Preferably, $R^1$ is hydrogen or methyl and $R^2$ is an alkyl group having two to eight carbon atoms. Most preferably, $R^1$ is hydrogen or methyl and $R^2$ is an alkyl group having two to four carbon atoms.

Examples of suitable (meth)acrylates include, but are not limited to, methyl (meth)acrylate, ethyl (meth)acrylate, propyl (meth)acrylate, isopropyl (meth)acrylate, butyl (meth)acrylate, isobutyl (meth)acrylate, pentyl (meth)acrylate, isoamyl (meth)acrylate, hexyl (meth)acrylate, 2-ethylhexyl (meth)acrylate, cyclohexyl (meth)acrylate, decyl (meth) acrylate, isodecyl (meth)acrylate, benzyl (mcth)acrylate, lauryl (meth)acrylate, isobornyl (meth)acrylate, octyl (meth) acrylate, nonyl (meth)acrylate, hydroxyethyl acrylate (HEA), hydroxyethyl methacrylate (HEMA) and hydroxypropyl (meth)acrylate (HPMA).

**Difunctional** (meth)acrylate monomers may be used in the monomer mixture as well. Examples include (meth) acrylate monomers having two carbon-carbon double bonds capable of reacting in a free-radical-initiated polymerization such as, e.g., ethylene glycol di(meth)acrylate, 1,4-butanediol di(meth)acrylate, 1,6-hexanediol di(meth)acrylate, allyl methacrylate, and the like.

Suitable vinyl monomers include styrene, methyl styrene, halostyrene, isoprene, diallylphthalate, divinylbenzene, conjugated butadiene, alpha-methylstyrene, vinyl toluene, vinyl naphthalene, and mixtures thereof. Styrene is a presently preferred vinyl monomer, in part due to its relatively low cost and also due for its Tg-enhancing properties, discussed below.

Other suitable polymerizable vinyl monomers for use in the ethylenically unsaturated monomer component include acrylonitrile, acrylamide, methacrylamide, methacrylonitrile, vinyl acetate, vinyl propionate, vinyl butyrate, vinyl stearate, N-isobutoxymethyl acrylamide, N-butoxymethyl acrylamide, and the like.

The other monomer or monomers in the mixture constitute the remainder of the monomer component, that is, 70 wt. % to 99.9 wt. %, preferably 80 wt. % to 99 wt. %, based on total weight of the monomer mixture. Preferably, at least 5 wt. % of the ethylenically unsaturated monomer component, more preferably at least 10 or at least 20 wt. %, will be selected from (meth) acrylates and more preferably alkyl (meth)acrylates. Preferably, at least 5 wt. %, more preferably at least 10 wt. %, will be selected from vinyl aromatic compounds.

In presently preferred embodiments, the ethylenically unsaturated monomer component does not include any acrylamide-type monomers (e.g., acrylamides or methacrylamides).

As mentioned above, the cured coating film has a Tg of at least about 40° C. In some embodiments the ethylenically unsaturated monomer component, emulsifying polymer and other monomers desirably are selected and used in sufficient amounts so that the final cured coating film will have a Tg greater than about 50° C, more preferably greater than about 60° C, even more preferably greater than about 70° C, and in some embodiments, greater than about 80° C. When multiple glass transition temperature values are observed, these recited values may be based upon the highest or lowest observed Tg value and preferably are based upon the highest observed Tg value. The oxirane-functional monomers and other monomers desirably are also selected and used in sufficient amounts so that the final cured coating film will have cured coating film Tg less than about 120° C, preferably less than about 115° C, more preferably less than about 110° C, and in some embodiments, less than about 100° C. When multiple glass transition temperature values are observed, these recited values may be based upon the highest or lowest observed Tg value and preferably are based upon the lowest observed Tg value. The values shown above may in some embodiments be determined for films made without other ingredients (e.g., coalescents, surfactants and other materials) that may affect the final cured coating film Tg.

Polymer Tg values can be estimated using the Fox equation:

$$1/Tg = W1/Tg1 + W2/Tg2 + \ldots\ WN/TgN$$

where 1, 2, ... N represent the individual monomers from which the polymer is made; W1, W2, ... WN add up to 1 and represent the weight fractions of each monomer from which the polymer is made; Tg1, Tg2, ... TGN represent the glass transition temperatures in degrees Kelvin for the homopolymers of each monomer from which the polymer is made; and Tg is the estimated polymer glass transition temperature. Tg values can also be measured, for example by using dynamic mechanical analysis (DMA) or differential scanning calorimetry (DSC) to evaluate the thermal behavior of the cured polymer film.

Increases in the emulsified latex polymer Tg can be obtained by making the component polymer using an ethylenically unsaturated monomer component containing a substantial portion or portions of monomers having a high Tg homopolymer. Exemplary such monomers and their homopolymer Tg values include isobutyl methacrylate (53° C, 326° K), benzyl methacrylate (54° C, 327° K), see-butyl methacrylate (60° C, 333° K), ethyl methacrylate (65° C, 338° K), isopropyl methacrylate (81° C, 354° K), dipentaerythritol pentaacrylate (90° C, 363° K), cyclohexyl methacrylate (92° C,

365° K), isobornyl acrylate (94° C, 367° K), ditrimethylolpropane tetraacrylate (98° C, 371 ° K), diethylene glycol diacrylate (100° C, 373° K), styrene (100° C, 373° K), 1,3-butylene glycol diacrylate (100° C, 374° K), pentaerythritol tetraacrylate (103° C, 376° K), pentaerythritol triacrylate (103° C, 376° K), ethoxylated(3)trimethylolpropane triacrylate (103° C, 376° K), dipropylene glycol diacrylate (104° C, 377° K), methyl methacrylate (105° C, 378° K), acrylic acid (106° C, 379° K), neopentyl glycol diacrylate (107° C, 380° K), cyclohexanedimethanol diacrylate (110° C, 383° K), isobornyl methacrylate (110° C, 383° K), phenyl methacrylate (110° C, 383° K), tert-butyl methacrylate (118° C, 391° K), methacrylic acid (228 ° C, 501 ° K) and tris(2-hydroxyethyl)isocyanurate triacrylate (272° C, 545° K).

Preferably, the ethylenically unsaturated monomer component (viz. the monomers from which the component polymer is formed) represents at least 40 wt. % and more preferably at least 50 wt. % of the emulsified latex polymer. Preferably, the ethylenically unsaturated monomer component represents no greater than 80 wt. % and more preferably no greater than 70 wt. % of the emulsified latex polymer. Such percentages are based on the total weight of ethylenically unsaturated monomer component and emulsifying polymer.

A variety of polymers can be used as the disclosed emulsifying polymer. The emulsifying polymers preferably include a suitable number of water-dispersing groups to facilitate efficient polymerization of the ethylenically unsaturated component in aqueous medium. Preferred emulsifying polymers are acid-containing or anhydride-containing polymers that can be neutralized or partially neutralized with an appropriate amine or other suitable base (preferably a "fugitive" base that appreciably volatilizes out of the coating upon coating cure) to form a salt that can be dissolved or stably dispersed in the aqueous medium. Preferred acid-containing polymers have an acid number of at least 40, and more preferably at least 100, milligrams (mg) KOH per gram of polymer. Preferred acid-containing polymers have an acid number no greater than 400, and more preferably no greater than 300, mg KOH per gram of polymer. The anhydride-containing polymer, when in water, preferably has an acid number having similar lower and upper limits. The acid emulsifying polymer acid number and the ratio of component polymer to emulsifying polymer appear to be related, with higher acid number emulsifying polymers being preferred when lower amounts of emulsifying polymer are present in the final emulsified latex polymer.

The emulsifying polymer has an Mn of at least about 8,500, preferably at least about 9,000, more preferably at least about 9,500 and most preferably at least about 10,000. Although not intended to be limited by theory, increased emulsifying polymer molecular weight appears within limits to contribute to improved flexibility in the disclosed coating composition after it has cured, thereby offsetting the reduced flexibility that may otherwise be caused by increases in Tg. Preferably the emulsifying polymer has a Mn value no greater than about 50,000 or no greater than about 40,000.

Preferred emulsifying polymers include those prepared by conventional free radical polymerization techniques, from unsaturated acid- or anhydride-functional monomers, salts thereof, and other unsaturated monomers. Of these, further preferred examples include those prepared from at least 15 wt. %, more preferably at least 20 wt. %, and in some embodiments 30 wt. % or more, of unsaturated acid- or anhydride-functional monomer, or salts thereof, and the balance other polymerizable unsaturated comonomers. Other preferred examples include those prepared from less than 60 wt. %, more preferably less than 55 wt. %, and in some embodiments less than 50 wt. %, of unsaturated acid- or anhydride-functional monomer, or salts thereof. A variety of acid- or anhydride-functional monomers, or salts thereof, can be used; their selection is dependent on the desired final emulsified latex polymer properties. Preferably, such monomers are ethylenically unsaturated, and more preferably, alpha, beta-ethylenically unsaturated. Suitable ethylenically unsaturated acid- or anhydride-functional monomers include monomers having a reactive carbon-carbon double bond and an acidic or anhydride group, or salts thereof. Preferred such monomers have from 3 to 20 carbons, at least 1 site of unsaturation, and at least 1 acid or anhydride group, or salt thereof.

Suitable acid-functional monomers include ethylenically unsaturated monobasic and dibasic acids, as well as anhydrides and monoesters of dibasic acids. The selected monomers preferably are readily copolymerizable with any other monomer(s) used to prepare the emulsifying polymer. Illustrative monobasic acids include those represented by the formula $CH_2=C(R^3)COOH$, where $R^3$ is hydrogen or an alkyl radical of 1 to 6 carbon atoms. Illustrative dibasic acids include those represented by the formulas $R^4(COOH)C=C(COOH)R^5$ and $R^4(R^5)C=C(COOH)R^6COOH$, where $R^4$ and $R^5$ are hydrogen, an alkyl radical of 1-8 carbon atoms, halogen, cycloalkyl of 3 to 7 carbon atoms or phenyl, and $R^6$ is an alkylene radical of 1 to 6 carbon atoms. Half-esters of these acids with alkanols of 1 to 8 carbon atoms may also be used.

Non-limiting examples of useful ethylenically unsaturated acid-functional monomers include acids such as, for example, acrylic acid, methacrylic acid, alpha-chloroacrylic acid, alpha-cyanoacrylic acid, crotonic acid, alpha-phenylacrylic acid, beta-acryloxypropionic acid, fumaric acid, maleic acid, sorbic acid, alpha-chlorosorbic acid, angelic acid, cinnamic acid, p-chlorocinnamic acid, beta-stearylacrylic acid, citraconic acid, mesaconic acid, glutaconic acid, aconitic acid, tricarboxyethylene, 2-methyl maleic acid, itaconic acid, 2-methyl itaconic acid, methyleneglutaric acid, and the like, or mixtures thereof. Preferred unsaturated acid-functional monomers include acrylic acid, methacrylic acid, crotonic acid, fumaric acid, maleic acid, 2-methyl maleic acid, itaconic acid, 2-methyl itaconic acid, and mixtures thereof. More preferred unsaturated acid-functional monomers include acrylic acid, methacrylic acid, crotonic acid, fumaric acid, maleic acid, itaconic acid, and mixtures thereof. Most preferred unsaturated acid-functional monomers include acrylic acid, methacrylic acid, maleic acid, crotonic acid, and mixtures thereof. If desired, aqueous salts of the above acids may also be employed.

Non-limiting examples of suitable ethylenically unsaturated anhydride monomers include compounds derived from the above acids (e.g., as a pure anhydride or mixtures of such). Preferred anhydrides include acrylic anhydride, methacrylic anhydride, and maleic anhydride.

Polymerization of the monomers to form an acid- or anhydride-functional polymer is usually conducted by organic solution polymerization techniques in the presence of a free radical initiator. Although the preparation of the acid-functional or anhydride-functional polymer is conveniently carried out in solution, neat processes or processes carried out in water may be used if desired.

Preferably, the acid- or anhydride-functional polymers are acid-functional acrylic polymers. However, in addition to or in place of acid- or anhydride-functional acrylic emulsifying polymers, emulsifying polymers based on acid- or anhydride-functional alkyd, polyester or polyurethane polymers, polyolefin polymers, or combinations thereof, can also be used in the practice of the invention. Polymers such as those described in U.S. Patent Nos. 3,479,310, 4,147,679 and 4,692,491 maybe employed, but with appropriate selection or modification to provide an emulsifying polymer having an Mn greater than about 8,500.

A salt (which can be a full salt or partial salt) of the emulsifying polymer may be formed by neutralizing or partially neutralizing acid groups (whether present initially in an acid-functional polymer or formed upon addition of an anhydride-functional polymer to water) or other water-dispersing *(e.g.,* anionic salt-forming) groups of the polymer with a suitable base such as, for example, an amine, preferably a tertiary amine. Some examples of suitable tertiary amines are trimethyl amine, dimethyl ethanol amine (also known as dimethylamino ethanol), methyldiethanol amine, triethanol amine, ethyl methyl ethanol amine, dimethyl ethyl amine, dimethyl propyl amine, dimethyl 3-hydroxy-l-propyl amine, dimethylbenzyl amine, dimethyl 2-hydroxy-1-propyl amine, diethyl methyl amine, dimethyl 1-hydroxy-2-propyl amine, triethyl amine, tributyl amine, N-methyl morpholine, and mixtures thereof. Most preferably triethyl amine or dimethyl ethanol amine is used as the tertiary amine.

The degree of neutralization required to form the desired polymer salt may vary considerably depending upon the amount of acid or other water-dispersing groups included in the polymer, and the degree of solubility or dispersibility of the salt which is desired. Ordinarily in making the emulsifying polymer water-dispersible, the acid groups or other water-dispersing groups in the polymer are at least 25% neutralized, preferably at least 30% neutralized, and more preferably at least 35% neutralized, with the amine in water. Preferably, the emulsifying polymer includes a sufficient number of acidic, anhydride or other water-dispersing groups to form a stable aqueous dispersion upon neutralization.

The disclosed water-dispersing groups may be used in place of, or in addition to, acid or anhydride groups. For further discussion of such water-dispersing groups, see, for example, U.S. Patent No. 4,147,679. Some further examples of anionic salt groups include sulphate groups ($-OSO_3^-$), phosphate groups ($-OPO_3^-$), sulfonate groups ($-SO_2O^-$), phosphinate groups ($-POO^-$), phosphonate groups ($-PO_3^-$), and combinations thereof. Some examples of suitable cationic salt groups include:

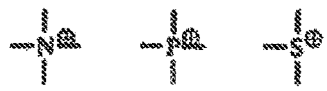

,

(referred to, respectively, as quaternary ammonium groups, quaternary phosphonium groups, and tertiary sulfate groups) and combinations thereof. Some examples of non-ionic water-dispersing groups include hydrophilic groups such as ethylene oxide groups. Compounds for introducing the aforementioned groups into polymers are known in the art. Some additional examples of neutralizing bases for forming anionic salt groups include inorganic and organic bases such as sodium hydroxide, potassium hydroxide, lithium hydroxide, ammonium hydroxide, and mixtures thereof. Some examples of neutralizing compounds for forming cationic salt groups include organic and inorganic acids such as formic acid, acetic acid, hydrochloric acid, sulfuric acid, and **combinations thereof.**

The amount of salt for neutralizing an acid-functional or anhydride-functional emulsifying polymer is preferably at least 5 wt. %, more preferably at least 10 wt. %, and even more preferably at least 15 wt. %. The amount of the salt for neutralizing an acid-functional or anhydride-functional emulsifying polymer preferably is no greater than 95 wt. %, more preferably no greater than 50 wt. %, and even more preferably no greater than 40 wt. %. These percentages are based on the total weight of the polymerizable ethylenically unsaturated monomer component and the salt of the emulsifying polymer. In embodiments where the emulsifying polymer includes water-dispersing groups other than neutralized acid- or anhydride-groups, the total amount of the polymer used in the polymerization will typically fall within the above parameters, with the above percentages based on based on total weight of ethylenically unsaturated monomer component and emulsifying polymer.

Without intending to be bound by theory, the reaction of tertiary amines with materials containing oxirane groups, when carried out in the presence of water, can afford a product that contains both a hydroxyl group and a quaternary ammonium hydroxide. Under preferred conditions an acid group, an oxirane group, and an amine form a quaternary salt. This linkage is favored, as it not only links (e.g., crosslinks) polymer chains but also promotes water dispersibility of the

resulting joined chains. It should be noted that an acid group and an oxirane group may also form an ester. Some ester-forming reactions may occur, but are less desirable when water dispersibility is sought.

While the exact mode of reaction is not fully understood, it is believed that a competition between the two reactions may take place; however, this is not intended to be limiting. In preferred embodiments, one reaction involves a tertiary amine neutralized acid-functional polymer reacting with an oxirane-functional monomer or polymer to form a quaternary ammonium salt. A second reaction involves esterification of the oxirane-functional monomer or polymer with a carboxylic acid or salt. Without intending to be bound by theory, it is believed the presence of water and level of amine favor formation of quaternary ammonium salts over ester linkages. A high level of quaternization improves water dispersibility while a high level of esterification gives higher viscosity and possibly gel-like material.

Preferably, the emulsifying polymer represents at least 20 wt. % and more preferably at least 30 wt. % of the emulsified latex polymer. Preferably, the emulsifying polymer represents no greater than 60 wt. % and more preferably no greater than 50 wt. % of the emulsified latex polymer. Such percentages are based on the total weight of ethylenically unsaturated monomer component and emulsifying polymer.

With regard to the conditions of the emulsion polymerization, the ethylenically unsaturated monomer component is preferably polymerized in aqueous medium with a water-soluble free radical initiator in the presence of a salt of an acid- or anhydride-functional emulsifying polymer.

The temperature of polymerization is typically from 0 to 100° C, and preferably from 30 to 90° C. If the initiation occurs thermally, a polymerization temperature from 70 to 90° C, and even more preferably from 80 to 85° C, is preferred. If the initiation occurs chemically via a redox system, a polymerization temperature from 30 to 60° C, and even more preferably from 40 to 50° C, is preferred. The pH of the aqueous medium is usually maintained at a pH of 5 to 12.

The free radical initiator can be selected from one or more water-soluble peroxides known to act as free radical initiators. Examples include hydrogen peroxide and t-butyl hydroperoxide. Other redox initiator systems well known in the art (*e.g.*, t-butyl hydroperoxide, erythorbic acid, and ferrous complexes) can also be employed. In some embodiments, it is especially preferred to use a mixture of benzoin and hydrogen peroxide. Further examples of polymerization initiators which can be employed include polymerization initiators that thermally decompose at the polymerization temperature to generate free radicals. Examples include both water-soluble and water-insoluble species, such as 2,2'-azo-bis(isobutyronitrile), 2,2'-azo-his(2,4-dimethylvaleronitfile), and 1-t-butyl-azocyanocyclohexane; hydroperoxides other than those already mentioned above such as t-amyl hydroperoxide, methyl hydroperoxide, and cumene hydroperoxide; peroxides such as benzoyl peroxide, caprylyl peroxide, di-t-butyl peroxide, ethyl 3,3'-di(t-butylperoxy) butyrate, ethyl 3,3'-di(t-amylperoxy) butyrate, t-butylperoxy-2-ethyl hexanoate, t-amylperoxy-2-ethyl hexanoate, and t-butylperoxy pivilate; peresters such as t-butyl peracetate, t-butyl perphthalate, and t-butyl perbenzoate; as well as percarbonates, such as di(1-cyano-1-methylethyl)peroxy dicarbonate; perphosphates, and the like; and combinations thereof. Persulfate initiators such as ammonium or alkali metal (potassium, sodium or lithium) persulfates may also be used, but may lead to poor water resistance properties in the cured coating and thus are not preferred.

Polymerization initiators can be used alone or as the oxidizing component of a redox system, which also preferably includes a reducing component such as ascorbic acid, malic acid, glycolic acid, oxalic acid, lactic acid, thiogycolic acid, or an alkali metal sulfite, more specifically a hydrosulfite, hyposulfite or metabisulfite, such as sodium hydrosulfite, potassium hyposulfite and potassium metabisulfite, or sodium formaldehyde sulfoxylate, and combinations thereof. The reducing component is frequently referred to as an accelerator or a catalyst activator.

The initiator and accelerator preferably are used in proportion from about 0.001% to 5% each, based on the weight of monomers to be copolymerized. Promoters such as chloride and sulfate salts of cobalt, iron, nickel or copper can be used in small amounts, if desired. Other examples of redox catalyst systems include tert-butyl hydroperoxide/sodium formaldehyde sulfoxylate/Fe(II), and ammonium persulfate/sodium bisulfite/sodium hydrosulfitelFe(II). Chain transfer agents can also be used to control polymer molecular weight, if desired.

Polymerization of the ethylenically unsaturated monomer component in the presence of an aqueous dispersion of an emulsifying polymer salt may be conducted as a batch, intermittent, or continuous operation. The polymerization ingredients may all be charged initially to the polymerization vessel, or metered in using proportioning techniques. The procedures for carrying out either approach will be familiar to persons having ordinary skill in the art. Preferably all, or substantially all, of the ingredients are charged to the polymerization vessel before commencing polymerization.

As discussed above, in certain embodiments a "batch" process may be used to polymerize the ethylenically unsaturated monomer component in the presence of an aqueous dispersion of the emulsifying polymer salt. While not intending to be bound by any theory, batch polymerization of the ethylenically unsaturated monomer component may result in a higher molecular weight emulsified latex polymer that may yield desirable performance properties for certain coating end uses such as, for example, beverage end coatings. In certain preferred embodiments, the component polymer, if considered by itself without the emulsifying polymer, will have a Mn of at least about 75,000, more preferably at least about 150,000, or even more preferably at least about 250,000. The upper range for the component polymer Mn is not restricted and may be 1,000,000 or more. In certain embodiments, however, the Mn of the component polymer is less than about 1,000,000, or less than about 600,000. In some embodiments (e.g., where batch polymerization of the component

polymer is used), the component polymer exhibits a Mn of at least about 75,000, more preferably at least about 150,000, and even more preferably at least about 250,000.

The disclosed coating compositions preferably include at least a film-forming amount of the emulsified latex polymer. Typically, the emulsified latex polymer will be the principal (*e.g.*, > 50 wt. %, > 80 wt. %, or > 90 wt.% of total resin solids in the coating composition), and in some embodiments exclusive, film-forming polymer in the coating composition. In preferred embodiments, the coating composition includes at least about 5 wt. %, more preferably at least about 15 wt. %, and even more preferably at least about 25 wt. % of the emulsified latex polymer, based on the weight of the emulsified latex polymer solids relative to the total weight of the coating composition. Preferably, the coating composition includes less than about 65 wt. %, more preferably less than about 55 wt. %, and even more preferably less than about 45 wt. % of the emulsified latex polymer, based on the weight of the emulsified latex polymer solids relative to the total weight of the coating composition.

It has been discovered that coating compositions using the aforementioned emulsified latex polymers may be formulated using one or more optional curing agents (*viz.*, crosslinking resins, sometimes referred to as "crosslinkers"). The resulting crosslinked emulsified latex polymers represent a preferred subclass. The degree of crosslinking may be only partial, resulting in a polymer that can be dispersed in an aqueous carrier, coated onto a substrate and coalesced to form a film, but which if dissolved in an organic solvent will form a gel that does not pass through a chromatography column for molecular weight measurement. The choice of a particular crosslinker typically depends on the particular product being formulated. For example, some coating compositions are highly colored (*e.g.*, gold-colored coatings). These coatings may typically be formulated using crosslinkers that themselves tend to have a yellowish color. In contrast, white coatings are generally formulated using non-yellowing crosslinkers, or only a small amount of a yellowing crosslinker. Preferred curing agents are substantially free of mobile or bound BPA, BPF, BPS and epoxides thereof, for example bisphenol A diglycidyl ether ("BADGE"), bisphenol F diglycidyl ether ("BFDGE") and epoxy novalacs.

In some embodiments, the coating composition may be cured without the use of an external crosslinker *(e.g.,* without phenolic crosslinkers). Additionally, the coating composition may be substantially free of formaldehyde and formaldehyde-containing compounds, essentially free of these compounds, essentially completely free of these compounds, or even completely free of these compounds.

Any of the well known hydroxyl-reactive curing resins can also be used. For example, phenoplast and aminoplast curing agents may be used.

Phenoplast resins include the condensation products of aldehydes with phenols. Formaldehyde and acetaldehyde are preferred aldehydes. Various phenols can be employed such as phenol, cresol, p-phenylphenol, p-tert-butylphenol, p-tert-amylphenol, and cyclopentylphenol.

Aminoplast resins are the condensation products of aldehydes such as formaldehyde, acetaldehyde, crotonaldehyde, and benzaldehyde with amino or amido group-containing substances such as urea, melamine, and benzoguanamine.

Examples of suitable crosslinking resins include, without limitation, benzoguanamine-formaldehyde resins, melamine-formaldehyde resins, etherified melamine-formaldehyde, and urea-formaldehyde resins. Preferably, the crosslinker is or includes a melamine-formaldehyde resin. An example of a particularly useful crosslinker is the fully alkylated melamine-formaldehyde resin commercially available from Cytec Industries, Inc. as CYMEL™ 303.

Examples of other generally suitable curing agents include the blocked or non-blocked aliphatic, cycloaliphatic or aromatic di-, tri-, or poly-valent isocyanates, such as hexamethylene diisocyanate (HMDI), cyclohexyl-1,4-diisocyanate, and the like. Further examples of generally suitable blocked isocyanates include isomers of isophorone diisocyanate, dicyclohexylmethane diisocyanate, toluene diisocyanate, diphenylmethane diisocyanate, phenylene diisocyanate, tetramethyl xylene diisocyanate, xylylene diisocyanate, and mixtures thereof. In some embodiments, blocked isocyanates having a Mn of at least about 300, more preferably at least about 650, and even more preferably at least about 1,000 may be employed.

Polymeric blocked isocyanates are preferred in certain embodiments. Some examples of suitable polymeric blocked isocyanates include a biuret or isocyanurate of a diisocyanate, a trifunctional "trimer", or a mixture thereof. Examples of suitable blocked polymeric isocyanates include TRIXENE™ BI 7951, TRIXENE BI 7984, TRIXENE BI 7963 and TRIXENE BI 7981 (TRIXENE materials are available from Baxenden Chemicals, Ltd., Accrington, Lancashire, England), DESMODUR™ BL 3175A, DESMODUR BL3272, DESMODUR BL3370, DESMODUR BL 3475, DESMODUR BL 4265, DESMODUR PL 340, DESMODUR VP LS 2078, DESMODUR VP LS 2117 and DESMODUR VP LS 2352 (DESMODUR materials are available from Bayer Corp., Pittsburgh, PA, USA), or combinations thereof. Examples of suitable trimers may include a trimerization product prepared from on average three diisocyanate molecules or a trimer prepared from on average three moles of diisocyanate (*e.g.*, HMDI) reacted with one mole of another compound such as, for example, a triol (*e.g.*, trimethylolpropane).

Examples of suitable blocking agents include malonates, such as ethyl malonate and diisopropyl malonate, acetylacetone, ethyl acetoacetate, 1-phenyl-3-methyl-5-pyrazolone, pyrazole, 3-methyl pyrazole, 3,5 dimethyl pyrazole, hydroxylamine, thiophenol, caprolactam, pyrocatechol, propyl mercaptan, N-methyl aniline, amines such as diphenyl

amine and diisopropyl amine, phenol, 2,4-diisobutylphenol, methyl ethyl ketoxime, alpha-pyrrolidone, alcohols such as methanol, ethanol, butanol and t-butyl alcohol, ethylene imine, propylene imine, benzotriazoles such as benzotriazole, 5-methylbenzotriazole, 6-ethylbenzotriazole, 5-chlorobenzotriazole and 5-nitrobenzotriazole, methyl ethyl ketoxime (MEKO), diisopropylamine (DIPA), and combinations thereof.

The level of curing agent *(viz.,* crosslinker) required will depend on the type of curing agent, the time and temperature of the bake, and the molecular weight of the emulsified polymer. If used, the crosslinker is typically present in an amount of up to 50 wt. %, preferably up to 30 wt. %, and more preferably up to 15 wt. %. If used, the crosslinker is typically present in an amount of at least 0.1 wt. %, more preferably at least 1 wt. %, and even more preferably at least 1.5 wt. %. These weight percentages are based upon the total weight of the resin solids in the coating composition.

In some embodiments, the disclosed coating composition includes, based on total resin solids, at least 5 wt. % of blocked polymeric isocyanates, more preferably from about 5 to about 20 wt. % of blocked polymeric isocyanates, and even more preferably from about 10 to about 15 wt. % of blocked polymeric isocyanates.

The disclosed coating composition may also include other optional polymers that do not adversely affect the coating composition or a cured coating composition resulting therefrom. Such optional polymers are typically included in a coating composition as a filler material, although they can be included as a crosslinking material, or to provide desirable properties. One or more optional polymers (e.g., filler polymers) can be included in a sufficient amount to serve an intended purpose, but not in such an amount to adversely affect the coating composition or a cured coating composition resulting therefrom.

Such additional polymeric materials can be nonreactive, and hence, simply function as fillers. Such optional nonreactive filler polymers include, for example, polyesters, acrylics, polyamides, polyethers, and novalacs. Alternatively, such additional polymeric materials or monomers can be reactive with other components of the composition (e.g., an oxirane-functional emulsified latex polymer). If desired, reactive polymers can be incorporated into the disclosed compositions, to provide additional functionality for various purposes, including crosslinking. Examples of such reactive polymers include, for example, functionalized polyesters, acrylics, polyamides, and polyethers. Preferred optional polymers are substantially free of mobile and bound BPA, BPF and BPS, and preferably are also substantially free of aromatic glycidyl ether compounds (e.g., BADGE, BFDGE and epoxy novalacs).

The disclosed coating compositions may also include other optional ingredients that do not adversely affect the coating composition or a cured coating composition resulting therefrom. Such optional ingredients are typically included in a coating composition to enhance composition esthetics, to facilitate manufacturing, processing, handling, and application of the composition, and to further improve a particular functional property of a coating composition or a cured coating composition resulting therefrom.

Such optional ingredients include, for example, catalysts, dyes, pigments, toners, extenders, fillers, lubricants, anticorrosion agents, flow control agents, thixotropic agents, dispersing agents, antioxidants, adhesion promoters, light stabilizers, surfactants, and mixtures thereof. Each optional ingredient is included in a sufficient amount to serve its intended purpose, but not in such an amount to adversely affect the coating composition or a cured coating composition resulting therefrom.

One preferred optional ingredient is a catalyst to increase the rate of cure. Examples of catalysts, include, but are not limited to, strong acids (*e.g.*, dodecylbenzene sulphonic acid (DDBSA, available as CYCAT 600 from Cytec), methane sulfonic acid (MSA), p-toluene sulfonic acid (pTSA), dinonylnaphthalene disulfonic acid (DNNDSA), trifluoromethanesulfonic acid (triflic acid), quaternary ammonium compounds, phosphorous compounds, and tin and zinc compounds. Specific examples include, but are not limited to, a tetraalkyl ammonium halide, a tetraalkyl or tetraaryl phosphonium iodide or acetate, tin octoate, zinc octoate, triphenylphosphine, and similar catalysts known to persons skilled in the art. If used, a catalyst is preferably present in an amount of at least 0.01 wt. %, and more preferably at least 0.1 wt. %, based on the weight of nonvolatile material. If used, a catalyst is preferably present in an amount of no greater than 3 wt. %, and more preferably no greater than 1 wt. %, based on the weight of nonvolatile material.

Another useful optional ingredient is a lubricant (*e.g.*, a wax), which facilitates manufacture of metal closures by imparting lubricity to sheets of coated metal substrate. Preferred lubricants include, for example, Carnauba wax and polyethylene type lubricants. If used, a lubricant is preferably present in the coating composition in an amount of at least 0.1 wt. %, and preferably no greater than 2 wt. %, and more preferably no greater than 1 wt. %, based on the weight of nonvolatile material.

Another useful optional ingredient is a pigment, such as titanium dioxide. If used, a pigment is present in the coating composition in an amount of no greater than 70 wt. %, more preferably no greater than 50 wt. %, and even more preferably no greater than 40 wt. %, based on the total weight of solids in the coating composition.

Surfactants can be optionally added to the coating composition (e.g., after the emulsified latex polymer has already been formed) to aid in flow and wetting of the substrate. Examples of surfactants, include, but are not limited to, nonylphenol polyethers and salts and similar surfactants known to persons skilled in the art. If used, a surfactant is preferably present in an amount of at least 0.01 wt. %, and more preferably at least 0.1 wt. %, based on the weight of resin solids. If used, a surfactant is preferably present in an amount no greater than 10 wt. %, and more preferably no greater

than 5 wt. %, based on the weight of resin solids. Preferably however the use of surfactants is avoided, as they may contribute to water sensitivity, flavor alteration or flavor scalping.

As previously discussed, the disclosed coating compositions preferably include water and may further include one or more optional organic solvents. Preferably, the coating composition includes at least about 70 wt. %, more preferably at least about 65 wt. %, and even more preferably at least about 60 wt. % of water, based on the weight of the coating composition. In some embodiments, the coating composition includes less than about 60 wt. %, more preferably less than about 50 wt. %, and even more preferably less than about 40 wt. % of water, based on the weight of the coating composition.

In certain embodiments, such as for example certain coil coating applications, the coating composition preferably includes one or more organic solvents. Exemplary solvents include alcohols such as methanol, ethanol, propyl alcohols (*e.g.*, isopropanol), butyl alcohols (e.g., n-butanol) and pentyl alcohols (*e.g.*, amyl alcohol); glycol ethers such as 2-butoxyethanol, ethylene glycol monomethyl ether (viz., butyl CELLOSOLVE™ from Dow Chemical Co.) and diethylene glycol monomethyl ether (*viz*., butyl CARBITOL™ from Dow Chemical Co.); ketones such as acetone and methyl ethyl ketone (MEK); N,N-dimethylformamides; carbonates such as ethylene carbonate and propylene carbonate; diglymes; N-methylpyrrolidone (NMP); acetates such as ethyl acetate, ethylene diacetate, propylene glycol monoacetate, propylene glycol diacetate and glycol ether acetates; alkyl ethers of ethylene; isophorones; aromatic solvents such as toluene and xylenes; and combinations thereof. Exemplary solvent amounts may for example be at least about 10 wt. %, more preferably at least about 20, and even more preferably at least about 25 wt. %, based on the weight of the coating composition. In some embodiments, the coating composition includes less than about 70 wt. %, more preferably less than about 60 wt. %, and even more preferably less than about 45 wt. % of organic solvent, based on the weight of the coating composition. While not intending to be bound by any theory, the inclusion of a suitable amount of organic solvent is advantageous for certain coil coating applications to modify flow and leveling of the coating composition, control blistering, and maximize the line speed of the coil coater. Moreover, vapors generated from evaporation of the organic solvent during cure of the coating may be used to fuel the curing ovens.

In some embodiments, such as for certain spray coating applications *(e.g.,* inside spray for food or beverage cans including, *e.g.,* aluminum beverage cans), the coating composition may have a total solids content greater than about 10 wt. %, more preferably greater than about 15 wt. %, and even more preferably greater than about 20 wt. %, based on the total weight of the coating composition. In these embodiments, the coating composition may also have a total solids weight less than about 40 wt. %, more preferably less than about 30 wt. %, and even more preferably less than about 25 wt.%, based on the total weight of the coating composition. In some of these embodiments, the coating composition may have a total solids weight ranging from about 18 wt. % to about 22 wt. %. The carrier (which preferably is an aqueous carrier that includes at least some organic solvent) may constitute the remainder of the weight of the coating composition.

Embodiments of the disclosed coating composition may for example contain at least about 10, at least about 15 or at least about 18 wt. % and up to about 30, up to about 25 or up to about 23 wt. % of the emulsified latex polymer; at least about 45, at least about 55 or at least about 60 wt. % and up to about 85, up to about 80 or up to about 70 wt. % water, and at least about 5, at least about 7 or at least about 10 wt. % and up to about 20, up to about 16 or up to about 13 wt. % organic solvent.

The coating composition preferably has a viscosity suitable for a given coating application. In some embodiments, the coating composition may have an average viscosity greater than about 20 seconds, more preferably greater than 25 seconds, and even more preferably greater than about 40 seconds, based on the Viscosity Test described below (Ford Viscosity Cup #2 at 25° C). In some embodiments, the coating composition may also have an average viscosity less than about 50 seconds, more preferably less than 40 seconds, and even more preferably less than about 30 seconds, when performed pursuant to ASTM D1200-88 using a Ford Viscosity Cup #2 at 25° C.

The disclosed coating compositions may be present as a layer of a mono-layer coating system or as one or more layers of a multi-layer coating system. The coating composition can be used as a primer coat, an intermediate coat, a top coat, or a combination thereof. The coating thickness of a particular layer and of the overall coating system will vary depending upon the coating material used, the substrate, the coating application method, and the end use for the coated article. Mono-layer or multi-layer coating systems including one or more layers formed from the disclosed coating composition may have any suitable overall coating thickness, and typically are applied, using the mixed units commonly employed in the packaging industry, at coating weights of about 1 to about 20 mg/in$^2$ (msi) and more typically at about 1.5 to about 10 msi. Typically, the coating weight for rigid metal food or beverage can applications will be about 1 to about 6 msi. In certain embodiments in which the coating composition is used as an interior coating on a drum (*e.g.*, a drum for use with food or beverage products), the coating weight may be approximately 20 msi.

The metal substrate used in forming rigid food or beverage cans, or portions thereof, typically has a thickness in the range of about 125 micrometers to about 635 micrometers. Electro tinplated steel, cold-rolled steel and aluminum are commonly used as metal substrates for food or beverage cans, or portions thereof. In embodiments in which a metal foil substrate is employed in forming, *e.g.,* a packaging article, the thickness of the metal foil substrate may be even thinner that that described above.

The disclosed coating compositions may be applied to a substrate either prior to, or after, the substrate is formed into an article such as, for example, a food or beverage container or a portion thereof. In one embodiment, a method of forming food or beverage cans is provided that includes: applying a coating composition described herein to a metal substrate (*e.g.*, applying the composition to the metal substrate in the form of a planar coil or sheet), hardening the composition, and forming (*e.g.*, via stamping) the substrate into a packaging container or a portion thereof *(e.g.,* a food or beverage can or a portion thereof). For example, two-piece or three-piece cans or portions thereof such as riveted beverage can ends *(e.g.,* soda or beer cans) with a cured coating of the disclosed coating composition on a surface thereof can be formed in such a method. In another embodiment, a method of forming food or beverage cans is provided that includes: providing a packaging container or a portion thereof *(e.g.,* a food or beverage can or a portion thereof), applying a coating composition described herein to the inside, outside or both inside and outside portions of such packaging container or a portion thereof *(e.g.,* via spray application, dipping, etc.), and hardening the composition.

As described above, the disclosed coating compositions are particularly well adapted for use on food and beverage cans *(e.g.,* two-piece cans, three-piece cans, etc.). Two-piece cans are manufactured by joining a can body (typically a drawn metal body) with a can end (typically a drawn metal end). The disclosed coatings are suitable for use in food or beverage contact situations and may be used on the inside of such cans. They are particularly suitable for spray applied, liquid coatings for the interior of two-piece drawn and ironed beverage cans and coil coatings for beverage can ends. The disclosed coating compositions also offer utility in other applications. These additional applications include, but are not limited to, wash coating, sheet coating, and side seam coatings *(e.g.,* food can side seam coatings). The coating composition may also be useful in medical packaging applications, including, for example, on surfaces of metered-dose inhalers ("MDIs"), including on drug-contact surfaces.

Spray coating includes the introduction via spraying of the coated composition onto a surface, e.g., into the inside of a preformed packaging container. Typical preformed packaging containers suitable for spray coating include food cans, beer and beverage containers, and the like. The spray preferably utilizes a spray nozzle capable of uniformly coating the inside of the preformed packaging container. The sprayed preformed container is then subjected to heat to remove the residual solvents and harden the coating.

A coil coating is described as the coating of a continuous coil composed of a metal *(e.g.,* steel or aluminum). Once coated, the coating coil is subjected to a short thermal, ultraviolet or electromagnetic curing cycle, for hardening *(e.g.,* drying and curing) of the coating. Coil coatings provide coated metal *(e.g.,* steel or aluminum) substrates that can be fabricated into formed articles, such as two-piece drawn food cans, three-piece food cans, food can ends, drawn and ironed cans, beverage can ends, and the like.

A wash coating is commercially described as the coating of the exterior of two-piece drawn and ironed ("D&I") cans with a thin layer of protectant coating. The exterior of these D&I cans are "wash-coated" by passing pre-formed two-piece D&I cans under a curtain of a coating composition. The cans are inverted, that is, the open end of the can is in the "down" position when passing through the curtain. This curtain of coating composition takes on a "waterfall-like" appearance. Once these cans pass under this curtain of coating composition, the liquid coating material effectively coats the exterior of each can. Excess coating is removed through the use of an "air knife." Once the desired amount of coating is applied to the exterior of each can, each can is passed through a thermal, ultraviolet or electromagnetic curing oven to harden *(e.g.,* dry and cure) the coating. The residence time of the coated can within the confines of the curing oven is typically from 1 minute to 5 minutes. The curing temperature within this oven will typically range from 150 to 220° C.

A sheet coating is described as the coating of separate pieces of a variety of materials *(e.g.,* steel or aluminum) that have been pre-cut into square or rectangular "sheets." Typical dimensions of these sheets are approximately one square meter. Once coated, each sheet is cured. Once hardened *(e.g.,* dried and cured), the sheets of the coated substrate are collected and prepared for subsequent fabrication. Sheet coatings provide coated metal *(e.g.,* steel or aluminum) substrates that can be successfully fabricated into formed articles, such as two-piece drawn food cans, three-piece food cans, food can ends, drawn and ironed cans, beverage can ends, and the like.

A side seam coating is described as the spray application of a liquid coating over the welded area of formed three-piece food cans. When three-piece food cans are being prepared, a rectangular piece of coated substrate is formed into a cylinder. The formation of the cylinder is rendered permanent due to the welding of each side of the rectangle via thermal welding. Once welded, each can typically requires a layer of liquid coating, which protects the exposed "weld" from subsequent corrosion or other effects of the contained foodstuff. The liquid coatings that function in this role are termed "side seam stripes." Typical side seam stripes are spray applied and cured quickly via residual heat from the welding operation in addition to a small thermal, ultraviolet, or electromagnetic oven.

For any of the application techniques described above, the curing process may be performed in either discrete or combined steps. For example, substrates can be dried at ambient temperature to leave the coating compositions in a largely uncrosslinked state. The coated substrates can then be heated to fully cure the compositions. In certain instances, the disclosed coating compositions may be dried and cured in one step. The cure conditions will vary depending upon the method of application and the intended end use. The curing process may be performed at any suitable temperature, including, for example, oven temperatures in the range of from about 100° C to about 300° C, and more typically from about

177° C to about 250° C. If the substrate to be coated is a metal coil, curing of the applied coating composition may be conducted, for example, by heating the coated metal substrate over a suitable time period to a peak metal temperature ("PMT") of preferably greater than about 177° C. More preferably, the coated metal coil is heated for a suitable time period (e.g., about 5 to 900 seconds) to a PMT of at least about 218° C.

Other commercial coating application and curing methods are also envisioned, for example, electrocoating, extrusion coating, laminating, powder coating, and the like.

Preferred coating compositions display one or more of the properties described in the Examples Section. More preferred coating compositions display one or more of the following properties: metal exposure value of less than 1 mA; metal exposure value after drop damage of less than 1.5 mA; global extraction results of less than 50 ppm; less than about 50%, preferably less than about 30% and more preferably less than about 10% aldehyde loss when evaluated for flavor scalping (and more preferably less than about 50%, less than about 30% or less than about 10% of the aldehyde loss exhibited by currently employed coatings for aluminum cans containing carbonated colas); adhesion rating of 10; blush rating of at least 7; slight or no crazing in a reverse impact test; no craze (rating of 10) in a dome impact test; feathering below 0.2 inch; COF range of 0.055 to 0.3; an initial end continuity of less than 10 mA (more preferably less than 5, 2, or 1 mA); and after pasteurization or retort, a continuity of less than 20 mA.

The present invention also discloses:

1. An article comprising:

one or more of a body portion or an end portion of a food or beverage can comprising a metal substrate; and
a coating composition disposed thereon, wherein the coating composition includes an emulsified latex polymer comprising a reaction product of ingredients including an ethylenically unsaturated monomer component polymerized in the presence of an aqueous dispersion of an emulsifying polymer having a number average molecular weight (Mn) of at least about 8,500, and a cured film of the coating composition has a glass transition temperature (Tg) of at least about 40° C
wherein the coating composition is substantially free of each of bisphenol A, bisphenol F, and bisphenol S, including epoxides thereof

2. A method, comprising:

providing a coating composition that includes an emulsified latex polymer comprising a reaction product of ingredients including an ethylenically unsaturated monomer component polymerized in the presence of an aqueous dispersion of an emulsifying polymer having a number average molecular weight (Mn) of at least about 8,500, and a cured film of the coating composition has a glass transition temperature (Tg) of at least about 40° C and is substantially free of each of bisphenol A, bisphenol F, and bisphenol S, including epoxides thereof; and
applying the coating composition to a metal substrate prior to or after forming the metal substrate into a food or beverage can or portion thereof.

3. The article of item 1 or method of item 2, wherein the emulsifying polymer is solution polymerized in organic solvent, and at least a portion of the organic solvent is removed from the aqueous dispersion after polymer formation.

4. The article or method of any preceding item, wherein the coating composition comprises a cured coating composition.

5. The article or method of any preceding item, wherein the ethylenically unsaturated monomer component comprises a mixture of monomers that includes at least one oxirane functional group-containing monomer.

6. The article or method of item 5, wherein the mixture of monomers includes at least one oxirane functional group-containing alpha, beta-ethylenically unsaturated monomer in an amount of 0.1 wt. % to 30 wt. %, based on the weight of the monomer mixture.

7. The article or method of any preceding item, wherein the emulsifying polymer is a polymer salt that includes anionic salt groups, cationic salt groups, or a combination thereof.

8. The article or method of any preceding item, wherein the emulsifying polymer comprises an acrylic polymer, a polyurethane polymer, a polyester resin, an alkyd resin, a polyolefin, or a combination thereof.

9. The article or method of any preceding item, wherein the emulsifying polymer comprises an acid- or anhydride-functional acrylic polymer, or a salt thereof.

10. The article or method of any preceding item, wherein the emulsifying polymer comprises a salt of an acid- or anhydride-functional polymer and an amine.

11. The article or method of any preceding item, wherein the emulsifying polymer comprises a salt of an acid- or anhydride-functional acrylic polymer, acid- or anhydride-functional polyurethane polymer, acid- or anhydride-functional polyester polymer, acid- or anhydride-functional alkyd polymer, acid- or anhydride-functional polyolefin polymer, or a combination thereof.

12. The article or method of any preceding item, wherein the emulsifying polymer comprises a salt of an amine and an acid- or anhydride-functional acrylic polymer, acid- or anhydride-functional polyurethane polymer, acid- or anhydride-functional polyester polymer, acid- or anhydride-functional alkyd polymer, acid- or anhydride-functional polyolefin polymer, or a combination thereof.

13. The article or method of any preceding item, wherein the emulsifying polymer has a number average molecular weight of 8,500 to 50,000.

14. The article or method of any preceding item, wherein the emulsifying polymer has a number average molecular weight of 10,000 to 20,000.

15. The article or method of any preceding item, wherein the ethylenically unsaturated component comprises about 40 to about 80 wt. % and the emulsifying polymer comprises about 20 to about 60 wt. % of the emulsified latex polymer, based on the total weight of the ethylenically unsaturated monomer component and the emulsifying polymer, and wherein the emulsifying polymer has an acid number of about 40 to about 400 milligrams (mg) KOH per gram of emulsifying polymer.

16. The article or method of any preceding item, wherein the ethylenically unsaturated component comprises about 50 to about 70 wt. % and the emulsifying polymer comprises about 30 to about 50 wt. % of the emulsified latex polymer, based on the total weight of the ethylenically unsaturated monomer component and the emulsifying polymer, and wherein the emulsifying polymer has an acid number of about 100 to about 300 milligrams (mg) KOH per gram of emulsifying polymer.

17. The article or method of any preceding item, wherein the ethylenically unsaturated monomer component is polymerized in the presence of the aqueous dispersion with a water-soluble free radical initiator at a temperature of 0° C to 100° C.

18. The article or method of any preceding item, wherein a cured film of the coating composition has a Tg of at least about 50° C.

19. The article or method of any preceding item, wherein the coating composition is substantially free of any structural units derived from a bisphenol.

20. The article or method of any preceding item, wherein the coating composition is substantially free of halogenated monomers.

21. The article or method of any preceding item, wherein the coating composition exhibits less than about 50% aldehyde loss when evaluated for flavor scalping.

22. The article or method of any preceding item, wherein the coating composition exhibits less than about 10% aldehyde loss when evaluated for flavor scalping.

23. The article or method of any preceding item, wherein the coating composition is present on a food-contact surface of the metal substrate.

24. The article or method of any preceding item, wherein the coating composition is suitable for forming an inside spray coating of a two-piece drawn and ironed aluminum beverage can.

25. The article or method of item 24, wherein the metal substrate is a two-piece drawn and ironed aluminum can having a cured continuous coating on an interior surface sprayed on such surface at a coating weight of about 1 to about 20 $mg/in^2$ (msi).

26. The article or method of item 24, wherein the coating composition:

a) includes 10 to 40 % by weight of the emulsified latex polymer;
b) has a viscosity from about 20 to about 50 seconds using Ford Viscosity Cup #2 at 25° C;
c) the ethylenically unsaturated component comprises about 40 to about 80 wt. % of the emulsified latex polymer and the emulsifying polymer comprises about 20 to about 60 wt. % of the emulsified latex polymer, based on the total weight of the ethylenically unsaturated monomer component and the emulsifying polymer, and
d) the emulsifying polymer has an acid number of about 40 to about 400 milligrams (mg) KOH per gram of emulsifying polymer.

27. The article or method of any preceding item, wherein the coating composition, when spray applied inside a 355 ml aluminum beverage can at a 100 to 130 mg/can coating weight, provides a metal exposure value less than 3.5 mA after a drop damage test.

28. The article of any preceding item, wherein the food or beverage can contains a food or beverage product.

EXAMPLES

The following examples are offered to aid in understanding of the present invention and are not to be construed as limiting the scope thereof. Unless otherwise indicated, all parts and percentages are by weight.

Curing Conditions

For beverage inside spray bakes at the inside spray coating thicknesses described below, the curing conditions involve maintaining the temperature measured at the can dome at 188 to 199° C for 30 seconds.
For beverage end coil bakes at the coating thicknesses described below, the curing conditions involve the use of a temperature sufficient to provide a peak metal temperature within the specified time (e.g., 10 seconds at 204° C means 10 seconds in the oven, for example, and attaining a peak metal temperature of 204° C).
The constructions cited were evaluated by tests as follows.

Initial Metal Exposure

This test method determines the amount of the inside surface of the can that has not been effectively coated by the sprayed coating. This determination is made through the use of an electrically conductive solution (1% NaCl in deionized water). The can is coated at a 100 to 130 mg/can coating weight, filled with this room-temperature conductive solution, and an electrical probe is attached in contact with the outside of the can (uncoated, electrically conducting). A second probe is immersed in the salt solution in the middle of the inside of the can. If any uncoated metal is present on the inside of the can, a current is passed between these two probes and registers as a value on an LED display. The LED displays the conveyed currents in milliamps (mA). The current that is passed is directly proportional to the amount of metal that has not been effectively covered with coating. The goal is to achieve 100% coating coverage on the inside of the can, which would result in an LED reading of 0.0 mA. Preferred coatings give metal exposure values of less than 3 mA, more preferred values of less than 2 mA, and even more preferred values of less than 1 mA. Commercially acceptable metal exposure values are typically less than 1.0 mA on average.

Metal Exposure after Drop Damage

Drop damage resistance measures the ability of the coated container to resist cracks after being in conditions simulating dropping of a filled can. The presence of cracks is measured by passing electrical current via an electrolyte solution, as previously described in the Initial Metal Exposure section. A coated container is filled with the electrolyte solution and the Initial Metal Exposure current is recorded. The can is then filled with water and dropped through a tube from a height of 61 cm onto a 33° inclined plane, causing a dent in the chime area. The can is then turned 180 degrees, and the process is repeated. Water is then removed from the can and metal exposure current is again measured as described above. If there is no damage, no change in current (mA) will be observed. Typically, an average of 6 or 12 container runs is recorded. Metal exposure current results both before and after the drop are reported. The lower the milliamp value, the

better the resistance of the coating to drop damage. Preferred coatings give metal exposure values after drop damage of less than 3.5 mA, more preferred valued of less than 2.5 mA, and even more preferred values of less than 1.5 mA.

Solvent Resistance

The extent of "cure" or crosslinking of a coating is measured as a resistance to solvents, such as methyl ethyl ketone (MEK, available from Exxon, Newark, NJ) or isopropyl alcohol (IPA). This test is performed as described in ASTM D 5402-93. The number of double-rubs (viz., one back-and forth motion) is reported.

Global Extraction

The global extraction test is designed to estimate the total amount of mobile material that can potentially migrate out of a coating and into food packed in a coated can. Typically a coated substrate is subjected to water or solvent blends under a variety of conditions to simulate a given end use. Acceptable extraction conditions and media can be found in 21CFR 175.300 paragraphs (d) and (e). The allowable global extraction limit as defined by the FDA regulation is 50 parts per million (ppm).

The extraction procedure is described in 21CFR 175.300 paragraph (e) (4) (xv) with the following modifications to ensure worst-case scenario performance: 1) the alcohol content was increased to 10% by weight and 2) the filled containers were held for a 10-day equilibrium period at 38° C (100 °F). These conditions are per the FDA publication "Guidelines for Industry" for preparation of Food Contact Notifications. The coated beverage can was filled with 10 weight percent aqueous ethanol and subjected to pasteurization conditions (66° C, 150 °F) for 2 hours, followed by a 10-day equilibrium period at 38° C (100°F). Determination of the amount of extractives was determined as described in 21CFR 175.300 paragraph (e) (5), and ppm values were calculated based on surface area of the can (no end) of 44 square inches with a volume of 355 ml. Preferred coatings give global extraction results of less than 50 ppm, more preferred results of less than 10 ppm, even more preferred results of less than 1 ppm. Most preferably, the global extraction results are non-detectable.

Flavor Scalping

A solution containing 250 parts per billion (ppb) of three different aldehydes at pH 3 was prepared as follows. First, an intermediate aldehyde stock solution (about 10,000 ppm) was prepared by diluting known amounts of the aldehydes octanal, nonanal and decanal in pure (190 proof) ethanol. Next, water acidified to pH 3 was prepared by adding approximately 600 $\mu$l of 75% phosphoric acid into 4 liters of deionized (DI) water, while using pH paper to ensure the pH is about pH 3. The pH was adjusted using more phosphoric acid or DI water to a final pH of from about 2.5 to about 3. A known amount of stock aldehyde solution was added into the acidified water with a dilution factor of about 40,000, to obtain a final concentration of about 250 ppb of each of the three aldehydes in a final volume of 4L.

Cured coatings were applied to 16.8 cm by 16.8 cm square metal panels and cured in an oven at a 204° C set point for 75 seconds to provide dry films with coating weights of about 1.9 msi. These panels were inserted into an FDA-specified single-sided extraction cells made according to the design found in the Journal of the Association of Official Analytical Chemists, 47(2):387 (1964), with minor modifications. The cell is 22.9 cm $\times$ 22.9 cm $\times$ 1.3 cm (9 in $\times$ 9 in $\times$ 0.5 in) with a 15.2 cm $\times$ 15.2 cm (6 in $\times$ 6 in) open area in the center of a TEFLON™ (DuPont) polytetrafluoroethylene spacer. This allows for exposure of 232 $cm^2$ (36 $in^2$) or 465 $cm^2$ (72 $in^2$) of the test panel to the aldehyde solution. The cell holds 300 mL of aldehyde simulating solvent. The ratio of solvent to surface area is 1.29 mL/$cm^2$ or 0.65 mL/$cm^2$ when 232 $cm^2$ (36 $in^2$) or 465 $cm^2$ (72 $in^2$) of the test article are exposed to the solution. The extraction cells were filled with the above-described solution containing 250 ppb of each aldehyde and maintained at 40° C for 3 days.

A gas chromatograph (GC) and the headspace solid-phase microextraction (HS-SPME) method were used to evaluate flavor scalping performance. The GC injection port was equipped with a 0.75 mm i.d. SUPELCO™ (Sigma-Aldrich) liner to minimize peak broadening. For the headspace analysis, the injection was performed in the splitless mode for 0.8 min at 250° C, and then split (1:55) after 0.8 minutes. The oven temperature was programmed at 40° C isothermally for 5 min, then ramped to 220° C at 10° C/min and held for 1 min at the final temperature. Helium was used as the carrier gas with a flowrate of 1.5 mL/min. The injector and detector temperatures were 250° C and 270° C, respectively. The amounts of each aldehyde lost from the test solution during storage were measured and reported as a percent of the original concentration. Flavor Scalping was reported as the % aldehyde lost relative to a current industry standard coating formulation.

Adhesion

Adhesion testing is performed to assess whether the coating adheres to the coated substrate. The adhesion test

was performed according to ASTM D 3359 - Test Method B, using SCOTCH™ 610 tape, available from 3M. Adhesion is generally rated on a scale of 0-10 where a rating of "10" indicates no adhesion failure, a rating of "9" indicates 90% of the coating remains adhered, a rating of "8" indicates 80% of the coating remains adhered, and so on. Adhesion ratings of 10 are typically desired for commercially viable coatings.

Blush Resistance

Blush resistance measures the ability of a coating to resist attack by various solutions. Typically, blush is measured by the amount of water absorbed into a coated film. When the film absorbs water, it generally becomes cloudy or looks white. Blush is generally measured visually using a scale of 0-10 where a rating of "10" indicates no blush and a rating of "0" indicates complete whitening of the film. Blush ratings of at least 7 are typically desired for commercially viable coatings and optimally 9 or above.

Process or Retort Resistance

This is a measure of the coating integrity of the coated substrate after exposure to heat and pressure with a liquid such as water. Retort performance is not necessarily required for all food and beverage coatings, but is desirable for some product types that are packed under retort conditions. The procedure is similar to the Sterilization or Pasteurization test. Testing is accomplished by subjecting the substrate to heat ranging from 105-130° C and pressure ranging from 0.7 to 1.05 kg/cm$^2$ for a period of 15 to 90 minutes. The coated substrate is immersed in DI water and subjected to heat of 121° C (250 °F) and pressure of 1.05 kg/cm$^2$ for a period of 90 minutes. The coated substrate is than tested for adhesion and blush as described above. In food or beverage applications requiring retort performance, adhesion ratings of 10 and blush ratings of at least 7 are typically desired for commercially viable coatings.

Necking Test

This test measures the flexibility and adhesion of the film following a commercial necking process. Necking is done to facilitate the application of a container end that allows sealing the container. The test involves applying the coating to the container at a recommended film thickness and subjecting the container to a recommended bake. Prior to the necking process, sample cans typically will have a metal exposure value of <1.0 mA (average of 12 cans) when evaluated using an electrolyte solution as described above. After the necking process, cans should display no increase in metal exposure compared to the average for 12 non-necked cans. Elevated mA values indicate a fracture in the film which constitutes film failure.

Reforming/Reprofiling Test

This test measures the flexibility and adhesion of the film following the commercial reforming process. Reforming or reprofiling are done to strengthen the can. The test involves applying the coating to the container at a recommended film thickness and subjecting the container to a recommended bake. Prior to the reforming process, sample cans typically will have a metal exposure value of <1.0 mA (average of 12 cans) when evaluated using an electrolyte solution as described above. After the reforming process, cans should display no increase in metal exposure compared to the average for 12 non-reformed cans. Elevated mA values indicate a fracture in the film which constitutes film failure.

Boiling Water Test

This test simulates the water resistance of the film. The coating is applied to an appropriate substrate at a targeted film thickness and bake cycle. DI water is heated in a container to boiling (100° C). Test cans or panels are placed in the boiling water. After 10 minutes, the test can or panel is removed, rinsed with water and dried. The coating is then crosshatched. A section of 25 mm (1 in.) long Scotch tape No. 610 is applied to the crosshatched area and immediately removed in a quick motion pulling perpendicular to the panel. The samples are then evaluated for adhesion and blush, as previously described. Beverage interior coatings preferably give adhesion ratings of 10 and blush ratings of at least 7, preferably at least 9 and optimally 10.

Boiling Acetic Acid Test

This test simulates the resistance of the film when exposed to acidic media, and is performed and evaluated as in the Boiling Water test but using a blend of 3 wt. % acetic acid and 97 wt. % DI water heated to 100° C and a 30 minute immersion time. Beverage interior coatings preferably give adhesion ratings of 10 and blush ratings of at least 7 and

optimally at least 9.

Citric Acid Test

This test simulates the resistance of the film to a 2% citric acid solution exposed to a 30 minute, 121° C retort condition. The coating is applied to an appropriate substrate at a targeted film thickness and bake cycle. Test cans or panels are placed inside a retort container containing the 2% citric acid solution. The solution is heated in the retort vessel to 121°C. After 30 minutes, the test can or panel is removed, rinsed with water and dried. The coating is then crosshatched and evaluated for adhesion and blush as in the Boiling Water test. Beverage interior coatings preferably give adhesion ratings of 10 and blush ratings of at least 7 and optimally at least 9.

Flavor - Water Test

This test simulates the potential for off flavor imparted from the coating. A trained flavor panel is required for best results with this test. Sample cans or panels are subjected to recommended film thickness and bake conditions. Cans are rinsed, filled with DI water, covered with aluminum foil and then immersed in a water bath at 63° C. Once the water inside the cans has reached 63° C, they are held at that temperature for 30 minutes. After 30 minutes, the cans are removed and allowed to cool overnight. The water from the cans is then provided to the flavor panel for testing. A blank, composed of water only is used as the control.

Glass Transition Temperature

Samples for DSC testing may be prepared by first applying the liquid resin composition onto aluminum sheet panels. The panels are then baked in a Fisher ISOTEMP™ electric oven for 20 minutes at 149° C (300° F) to remove volatile materials. After cooling to room temperature, the samples are scraped from the panels, weighed into standard sample pans and analyzed using the standard DSC heat-cool-heat method. The samples are equilibrated at -60° C, then heated at 20° C per minute to 200° C, cooled to - 60° C, and then heated again at 20° C per minute to 200 °C. Glass transitions are calculated from the thermogram of the last heat cycle. The glass transition is measured at the inflection point of the transition. When multiple transitions are observed, multiple glass transition temperatures are recorded.

**Example 1, Run 1 - Preparation of Add-Functional**

**Acrylic Polymeric Emulsifier No. 1**

A premix of 2245.54 parts glacial methacrylic acid (GMAA), 1247.411 parts ethyl acrylate (EA), 1496.931 parts styrene, 1513.425 parts butanol, and 167.575 parts deionized water was prepared in a monomer premix vessel. In a separate vessel, an initiator premix of 299.339 parts LUPEROX™ 26 initiator from Arkerna and 832.275 parts butanol was prepared. To a reaction vessel equipped with a stirrer, reflux condenser, thermocouple, heating and cooling capability, and inert gas blanket, 1778.649 parts butanol and 87.25 parts deionized water were added. With agitation and an inert blanket, the reaction vessel was heated to 97 to 102° C with reflux occurring. Once within the temperature range, 46.442 parts LUPEROX 26 initiator was added. Five minutes after the initiator addition, the monomer premix and the initiator premix were added simultaneously to the reaction vessel over two and a half hours while maintaining the temperature range at 97 to 102° C with reflux and cooling as needed. After the premix addition, the monomer premix vessel was rinsed with 96.625 parts butanol, the initiator premix vessel was rinsed with 22.0 parts butanol, and both rinses were added to the reaction vessel. Immediately after rinsing, a second initiator premix of 59.33 parts LUPEROX 26 initiator and 24.0 parts butanol was added to the reaction vessel over one hour maintaining the temperature range of 97° C to 102° C. At the end of the addition, the premix vessel was rinsed with 22.0 parts butanol and the rinse was added to the reaction vessel. Thirty minutes after rinsing the initiator premix vessel, 12.889 parts LUPEROX 26 initiator was added to the reaction vessel and rinsed with 1.0 parts butanol. The ingredients were allowed to react an additional two hours whereupon 47.319 parts deionized water were added and the reaction vessel was cooled to less than 60° C. This process gives an acrylic emulsifying polymer (*viz.*, an acrylic polymeric emulsifier) with solids of ~50.0% NV, an acid number of ~300, a Brookfield viscosity of ~25,000 centipoise, Mn of ~6300, Mw of 12,500 and polydispersity (PDI) of 2.0. The Tg as calculated using the Fox equation is 86° C.

**Example 1, Run 2 - Preparation of Acid-Functional**

**Acrylic Polymeric Emulsifier No. 2**

A premix of 115.982 parts GMAA, 249.361 parts EA, 214.567 parts styrene, 47.649 parts butanol, and 4.649 parts deionized water was prepared in a monomer premix vessel. In a separate vessel, an initiator premix of 12.756 parts LUPEROX 26 initiator and 6.973 parts butanol was prepared. To a reaction vessel equipped with a stirrer, reflux condenser, thermocouple, heating and cooling capability, and inert gas blanket, 206.71 parts butanol and 10.14 parts deionized water was added. With agitation and an inert blanket, the reaction vessel was heated to 97 to 102° C with reflux occurring. Once within the temperature range, 1.979 parts LUPEROX 26 was added. Five minutes after the LUPEROX 26 addition, the monomer premix and the initiator premix was added simultaneously to the reaction vessel over two and a half hours while maintaining the temperature range at 97 to 102° C with reflux and cooling as needed. After the premix additions, the monomer premix vessel was rinsed with 10.46 parts butanol, the initiator premix vessel was rinsed with 3.487 parts butanol, and both rinses were added to the reaction vessel. Immediately after rinsing, a second initiator premix of 2.528 parts LUPEROX 26 initiator and 20.919 parts butanol was added to the reaction vessel over thirty minutes maintaining the temperature range of 97° C to 102° C. At the end of the addition, the premix vessel was rinsed with 5.346 parts butanol and the rinse was added to the reaction vessel. Thirty minutes after rinsing the initiator premix vessel, 0.494 parts LUPEROX 26 initiator was added to the reaction vessel and rinsed with 13.946 parts butanol. The ingredients were allowed to react an additional two hours whereupon 69.73 parts butanol and 2.324 parts deionized water were added and the reaction vessel was cooled to less than 60° C. This process gives an acrylic emulsifying polymer with solids of ~58.0% NV, an acid number of -130, a Brookfield viscosity of -22,000 centipoise, Mn of 12,000, Mw of 29,500 and PDI of 2.5. The Tg as calculated using the Fox equation is 45° C.

**Example 2, Run 1 (Low Tg) - Preparation of Control Emulsion No. 1 at Low Tg**

To a reaction vessel equipped with a stirrer, reflux condenser, thermocouple, heating and cooling capability, and inert gas blanket, 4754.595 parts of deionized water, 143.835 parts dimethyl ethanol amine (DMEOA) and 1633.46 parts Acid-Functional Acrylic Polymeric Emulsifier No. 1 were added and heated to 70° C. In a separate vessel, 898.642 parts styrene, 1260.619 parts butyl acrylate and 175.122 parts glycidyl methacrylate were premixed and stirred until uniform. Using the Fox Equation, this monomer premix containing 38.5 wt. % styrene, 54.0 wt. % butyl acrylate and 7.5 wt. % glycidyl methacrylate would provide a component polymer having an estimated -5° C Tg. When the temperature of the reaction vessel was at 70° C, 23.031 parts benzoin and 37 parts deionized water were added to the reaction vessel. The contents were then heated to 81° C. At 81° C, a 35% solution of hydrogen peroxide was added and rinsed into the reaction vessel with a total of 37.031 parts deionized water. After five minutes at temperature the monomer premix was added uniformly to the reaction vessel over 30 minutes while maintaining a temperature of 80° C to 83° C. Once the monomer premix had been added, the premix vessel was rinsed with 826 parts deionized water which was then added to the reaction vessel. Ten minutes after the rinse was added, 4 parts benzoin and 3.911 parts 35% solution of hydrogen peroxide were added and rinsed with a total of 28 parts deionized water. The reaction was allowed to continue for 45 minutes whereupon 1.304 parts benzoin and 1.304 parts 35% solution of hydrogen peroxide were added and rinsed with a total of 28 parts deionized water. The reaction proceeded for two hours. After two hours, cooling was applied to the batch while 12.602 parts TIGONOX™ A-W70 t-butyl hydroperoxide from Akzo Nobel, 1.738 parts of an iron complex aqueous solution containing 7 wt. % of an iron-sodium-EDTA (ethylene diamine tetraacetic acid) complex in water, and a premixed solution containing 8.691 parts erythorbic acid, 9.343 parts DMEOA and 74.742 parts deionized water were added and rinsed with14 parts deionized water. The process was repeated several times. Upon cooling the reaction yielded emulsified latex polymers containing 30.7 to 32.7 % solids, with a #4 Ford viscosity of 15 - 100 seconds, an acid number of 60 - 80, a pH of 6.5 - 7.5, and a particle size of 0.24 - 0.34 micrometers. Due to the partially-crosslinked nature of the emulsified latex polymers, they could not be run through a gel permeation chromatography column for molecular weight determination.

**Example 2, Run 2 (High Tg) - Preparation of Control Emulsion No. 1 at High Tg**

Using the general method employed for Example 2, Run 1 (Low Tg), a high Tg version of the Control No. 1 Emulsion was prepared by adjusting the monomer premix ratio to 77.2 wt. % styrene, 15.3 wt. % butyl acrylate and 7.5 wt. % glycidyl methacrylate. Using the Fox equation, the resulting component polymer had an estimated 60° C Tg. The emulsified latex polymer contained 31.9% solids, with a #4 Ford viscosity of 35 seconds, an acid number of 69, a pH of 6.9, and a particle size of 0.21 micrometers.

**Example 2, Run 3 (Low Tg) - Preparation of Control Emulsion No. 2 at Low Tg**

Using the general method employed for Example 2, Run 1 (Low Tg), a low Tg version of the Control No. 2 Emulsion was prepared by adding 1485.611 parts of Acid-Functional Acrylic Polymeric Emulsifier No. 1 to the reaction vessel and heating to 35° C. At temperature, 490.409 parts of deionized water and 143.611 parts DMEOA were added, followed by 4413.677 parts deionized water, and while maintaining 35° C. In a separate vessel, 898.425 parts styrene, 1260.147 parts butyl acrylate, and 174.980 parts glycidyl methacrylate were premixed and stirred until uniform. Using the Fox Equation, this monomer premix containing 38.5 wt. % styrene, 54.0 wt. % butyl acrylate and 7.5 wt. % glycidyl methacrylate would provide a component polymer having an estimated -5° C Tg. The monomer premix was then added to the reaction vessel at 35° C, followed by rinsing the premix vessel with 99.988 parts deionized water and adding the rinse to the reaction vessel. The reaction vessel contents were mixed for 30 minutes. After this mixing time, 3.946 parts TRIGONOX TAHP-W85 tert-amyl hydroperoxide from Akzo Nobel were added to the reaction vessel. The reaction mixture was stirred for five minutes after which a premix of 2.892 parts erythorbic acid, 249.971 parts deionized water, 2.892 parts DMEOA, and 0.257 parts iron complex aqueous solution was added over two hours. The contents of the reaction vessel were allowed to increase in temperature due to the reaction. Cooling was applied when the temperature increased to 65° C, and stopped when the temperature decreased to 60° C. When the premix addition was complete, the premix vessel was rinsed with 773.194 parts deionized water and the rinse was added to the reaction vessel. The reaction mixture was held for one hour and cooled to below 49° C. This process yields emulsified latex polymers containing 29.8 to 31.8 % solids, with a #4 Ford viscosity of 15 - 100, an acid number of 60 - 80, a pH of 6.5 - 7.5, and a particle size of 0.1 - 0.5 micrometers. Due to the partially-crosslinked nature of the emulsified latex polymers, they could not be run through a gel permeation chromatography column for molecular weight determination.

**Example 2, Run 4 (High Tg) - Preparation of Control Emulsion No. 2 at High Tg**

Using the general method employed for Example 2, Run 3 (High Tg), a high Tg version of the Control No. 2 Emulsion was prepared by adjusting the monomer premix ratio to 77.2 wt. % styrene, 15.3 wt. % butyl acrylate and 7.5 wt. % glycidyl methacrylate. Using the Fox equation, the resulting component polymer had an estimated 60° C Tg. The emulsified latex polymer contained 31.9% solids, with a #4 Ford viscosity of 35 seconds, an acid number of 69, a pH of 6.9, and a particle size of 0.21 micrometers.

Coating compositions were prepared from the low and high Tg versions of Control Emulsion Nos. 1 and 2, applied inside metal beverage containers, cured, and evaluated. The coating composition ingredients were added in the order shown below in Table 1 with agitation. DMEOA was added as needed to obtain a desired final viscosity. The coating compositions were sprayed from below into the interior of 355 ml aluminum cans using typical laboratory conditions and a 100 to 130 mg/can coating weight, and cured at 188 to 199 °C (as measured at the can dome) for 30 seconds through a gas oven conveyor at typical heat schedules for this application. The application and film properties are shown below in Table 2.

**Table 1**

| Spray Coating Compositions | | | | |
|---|---|---|---|---|
| | Spray Coating 1 (Low Tg) | Spray Coating 2 (High Tg) | Spray Coating 3 (Low Tg) | Spray Coating 4 (HighTg) |
| Example 2, Run 1 (Low Tg) | 62.8 | | | |
| Example 2, Run 2 (High Tg) | | 62.8 | | |
| Example 2, Run 3 (Low Tg) | | | 62.8 | |
| Example 2, Run 4 (High Tg) | | | | 62.8 |
| DI Water | 25.3 | 25.3 | 25.3 | 25.3 |
| Butyl CELLOSOLVE | 5.1 | 5.1 | 5.1 | 5.1 |
| Amyl Alcohol | 3.1 | 3.1 | 3.1 | 3.1 |
| Butyl Alcohol | 0.7 | 0.7 | 0.7 | 0.7 |
| DI Water | 3.0 | 3.0 | 3.0 | 3.0 |
| DMEOA | As Needed | As Needed | As Needed | As Needed |
| Formulation % Solids | 20% | 20% | 20% | 20% |
| Viscosity #2 Ford Cup, sees | 61 | 63 | 57 | 48 |

**Table** 2

| Drop Can, Necking and Reforming | | | | |
|---|---|---|---|---|
| | **Spray Coating 1 (Low Tg)** | **Spray Coating 2 (High Tg)** | **Spray Coating 3 (LowTg)** | **Spray Coating 4 (High Tg)** |
| Estimated Film Tg | ~20° C | ~70° C | ~20° C | ~70° C |
| Metal Exposure After Drop Damage, mA | 0.4 | 200+ | 3.0 | 200+ |
| Necking | Pass | Fail | Pass | Fail |
| Reforming | Pass | Fail | Pass | Fail |

The data in Table 2 shows that increasing the film Tg value adversely affects coating flexibility.

**Example 3**

**Preparation of Test Emulsion**

Using the general method employed for Example 2, Run 3 (High Tg) but using a higher molecular weight emulsifying polymer, 201.394 parts Acid-Functional Acrylic Polymeric Emulsifier No. 2 and 46.65 parts deionized water were added to the reaction vessel. Next, 13.661 parts DMEOA was added over 5-10 minutes while the temperature of the reaction mixture was allowed to increase. The DMEOA addition vessel was rinsed with 2.632 parts deionized water and the rinse was added to the reaction vessel. Next, 354.29 parts deionized water was added over 30 - 45 minutes while heating the reaction vessel to 50° C. In a separate vessel, 119.898 parts styrene, 39.248 parts butyl acrylate, and 16.067 parts glycidyl methacrylate were premixed and stirred until uniform. Using the Fox Equation, this monomer premix containing 68.4 wt. % styrene, 22.4 wt. % butyl acrylate and 9.2 wt. % glycidyl methacrylate would provide a component polymer having an estimated 45° C Tg. The monomer premix was added to the reaction vessel over 20 - 25 minutes. When the premix vessel was empty it was rinsed with 171.92 parts deionized water and the rinse was added to the reaction vessel. The reaction vessel was stirred for 15 minutes to make the contents uniform. Next, 0.338 parts TRIGONOX TAHP -W85 tert-amyl hydroperoxide was added and rinsed with 2.369 parts deionized water. The reaction mixture was stirred for five minutes after which a premix of 0.248 parts erythorbic acid, 21.398 parts deionized water, 0.248 parts DMEOA and 0.024 parts iron complex aqueous solution was added over one hour. The reaction vessel was allowed to increase in temperature to a maximum of 84° C. When the premix addition was complete, the premix vessel was rinsed with 6.19 parts deionized water and allowed to react for 60 minutes while the temperature was allowed to drift down to 55° C. After the 60 minutes had elapsed, 0.038 parts TRIGONOX TAHP -W85 tert-amyl hydroperoxide were added and rinsed with 0.263 parts deionized water followed by a premix of 0.028 parts erythorbic acid, 2.378 parts deionized water and 0.028 parts DMEOA rinsed with 1.69 parts deionized water. The reaction mixture was held for 60 minutes at 55° C before cooling to below 38° C. This process yields emulsified latex polymers containing 28.2 to 30.2 % solids, with a #4 Ford viscosity of 15" - 100", an acid number of 40 - 60, a pH of 7.2 - 8.2, and a particle size of 0.07 - 0.14 micrometers. Due to the partially-crosslinked nature of the emulsified latex polymers, they could not be run through a gel permeation chromatography column for molecular weight determination. This Example employed a higher molecular weight emulsifying polymer than was used in Example 2, and the monomer premix addition technique employed in Example 2, Run Nos. 3 and 4.

**Example 4**

**Inside Spray Coating Compositions**

Coating compositions made using Example 2, Run 1 (Low Tg) (viz., the low Tg version of Control Emulsion No. 1) and the Example 3 Test Emulsion were prepared as shown below in Table 3. The compositions were spray-applied inside metal beverage containers, cured and evaluated as in Example 2. The application and film properties are shown below in Table 4.

**Table 3**

| Spray Coating Composition | | |
|---|---|---|
| **Composition (Parts)** | **Run 1 (Low Tg Latex)** | **Run 2 (High Tg Latex, high molecular weight emulsifying polymer)** |
| Example 2, Run 1 (Low Tg) Emulsion | 62.8 | |
| Example 3Test Emulsion | | 68.1 |
| DI Water | 25.3 | 17.6 |
| Butyl CELLOSOLVE | 5.1 | 5.7 |
| Amyl alcohol | 3.1 | 4.8 |
| Butyl alcohol | 0.7 | |
| RP-912 phenol-formaldehyde phenolic resin (Dexter Corp.) | 0 | 0.5 |
| DI Water | 3.0 | 3.0 |
| DMEOA | As needed | As needed |
| Formulation % Solids | 20% | 20% |
| Viscosity #2 Ford Cup, sees | 60 | 50 |

**Table 4**

| Coating Application and Film Properties | | |
|---|---|---|
| | **Run 1 (Low Tg Latex)** | **Run 2 (High Tg Latex)** |
| **Application** | | |
| Initial Metal Exposure, mA | <0.20 | <0.20 |
| Metal Exposure After Drop Damage, mA | <0.20 from initial | <0.20 from initial |
| Blister | Commercially Acceptable | Commercially Acceptable |
| Necking | Pass | Pass |
| Refoming | Pass | Pass |
| Foam | None | None |
| **Film Performance** | | |
| Measured Film Tg | $20^{O}$ C | $70^{O}$ C |
| Boiling Water | Pass | Pass |
| 3% Boiling Acetic Acid | Pass | Pass |
| 2% Citric Acid | Pass | Pass |
| Flavor - Water | Pass | Pass |
| Flavor Scalping, Aldehyde Loss | 65% | 80% |

The data in Table 4 shows that improved Flavor Scalping resistance and needed coating application and film properties were obtained by employing a high Tg coating composition made using a high molecular weight emulsifying polymer.

The complete disclosures of the patents, patent documents, and publications cited herein are incorporated by reference in their entirety as if each were individually incorporated. Various modifications and alterations to this invention will become apparent to those skilled in the art without departing from this invention. It should be understood that this invention is not intended to be unduly limited by the illustrative embodiments and examples set forth herein and that such examples and embodiments are presented by way of example only, with the scope of the invention intended to be limited only by the claims set forth below.

## Claims

**1.** An article comprising:

one or more of a body portion or an end portion of a food or beverage can comprising a metal substrate; and a coating composition disposed thereon, wherein the coating composition includes an emulsified latex polymer comprising a reaction product of ingredients including an ethylenically unsaturated monomer component polymerized in the presence of an aqueous dispersion of an emulsifying polymer having a number average molecular weight (Mn) of at least about 8,500, and a cured film of the coating composition has a glass transition temperature (Tg) of at least about 40° C,
wherein the coating composition is substantially free of each of bisphenol A, bisphenol F,
and bisphenol 5, including epoxides thereof.

**2.** A method, comprising:

providing a coating composition that includes an emulsified latex polymer comprising a reaction product of ingredients including an ethylenically unsaturated monomer component polymerized in the presence of an aqueous dispersion of an emulsifying polymer having a number average molecular weight (Mn) of at least about 8,500, and a cured film of the coating composition has a glass transition temperature (Tg) of at least about 40° C and is substantially free of each of bisphenol A, bisphenol F, and bisphenol 5, including epoxides thereof; and
applying the coating composition to a metal substrate prior to or after forming the metal substrate into a food or beverage can or portion thereof.

**3.** The article of claim 1 or method of claim 2, wherein the emulsifying polymer is solution polymerized in organic solvent.

**4.** The article of claim 1 or claim 2, wherein the coating composition comprises a cured coating composition.

**5.** The article or method of any preceding claim, wherein the ethylenically unsaturated monomer component comprises a mixture of monomers that includes at least one oxirane functional group-containing monomer.

**6.** The article or method of claim 5, wherein the mixture of monomers includes at least one oxirane functional group-containing alpha, beta-ethylenically unsaturated monomer in an amount of 0.1 wt. % to 30 wt. %, based on the weight of the monomer mixture.

**7.** The article or method of any preceding claim wherein the ethylenically unsaturated monomer component is a mixture of monomers that includes a meth(acrylate) monomer.

**8.** The article or method of claim 5 or 6, wherein at least 5 wt. % of the ethylenically unsaturated monomer component, preferably at least 10 or at least 20 wt. %, are selected from (meth) acrylates, preferably alkyl (meth)acrylates.

**9.** The article or method of any preceding claim, wherein at least 5 wt. %, more preferably at least 10 wt. % of the mixture of monomers are selected from vinyl aromatic compounds.

**10.** The article or method of any preceding claim, wherein the emulsifying polymer comprises a salt of an acid- or anhydride-functional polymer and an amine, preferably a tertiary amine.

**11.** The article or method of any preceding claim, wherein the emulsifying polymer has a number average molecular weight of 8,500 to 50,000.

**12.** The article or method of any preceding claim, wherein the emulsifying polymer has a number average molecular weight of 10,000 to 20,000.

**13.** The article or method of any preceding claim, wherein the ethylenically unsaturated component comprises about 40 to about 80 wt. % and the emulsifying polymer comprises about 20 to about 60 wt. % of the emulsified latex polymer, based on the total weight of the ethylenically unsaturated monomer component and the emulsifying polymer, and wherein the emulsifying polymer has an acid number of about 40 to about 400 milligrams (mg) KOH per gram of emulsifying polymer.

**14.** The article or method of any preceding claim, wherein the ethylenically unsaturated component comprises about 50 to about 70 wt. % and the emulsifying polymer comprises about 30 to about 50 wt. % of the emulsified latex polymer, based on the total weight of the ethylenically unsaturated monomer component and the emulsifying polymer, and wherein the emulsifying polymer has an acid number of about 100 to about 300 milligrams (mg) KOH per gram of emulsifying polymer.

**15.** The article or method of any preceding claim, wherein the ethylenically unsaturated monomer component is polymerized in the presence of the aqueous dispersion with a water-soluble free radical initiator at a temperature of 0° C to 100° C.

**16.** The article or method of any preceding claim, wherein a cured film of the coating composition has a Tg of at least about 50° C.

**17.** The article or method of any preceding claim, wherein a cured film of the coating composition has a Tg of less than about 120°C, preferably less than about 100°C.

**18.** The article or method of any preceding claim, wherein the coating composition is present on a food-contact surface of the metal substrate.

**19.** The article or method of any preceding claim, wherein the coating composition is suitable for forming an inside spray coating of a two-piece drawn and ironed aluminum beverage can.

**20.** The article or method of claim 19, wherein the metal substrate is a two-piece drawn and ironed aluminum can having a cured continuous coating on an interior surface sprayed on such surface at a coating weight of about 1 to about 20 $mg/in^2$ (msi).

**21.** The article or method of claim 19, wherein the coating composition:

a) includes 10 to 40 % by weight of the emulsified latex polymer;
b) has a viscosity from about 20 to about 50 seconds using Ford
Viscosity Cup #2 at 25° C;
c) the ethylenically unsaturated component comprises about 40 to about 80 wt. % of the emulsified latex polymer and the emulsifying polymer comprises about 20 to about 60 wt. % of the emulsified latex polymer, based on the total weight of the ethylenically unsaturated monomer component and the emulsifying polymer; and
d) the emulsifying polymer has an acid number of about 40 to about 400 milligrams (mg) KOH per gram of emulsifying polymer.

**22.** The article or method of any preceding claim, wherein the coating composition, when spray applied inside a 355 ml aluminum beverage can at a 100 to 130 mg/can coating weight, provides a metal exposure value less than 3.5 mA after a drop damage test.

**23.** The article of any preceding claim, wherein the food or beverage can contains a food or beverage product.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 62362729
- US 3479310 A
- US 4147679 A
- US 4692491 A

### Non-patent literature cited in the description

- *Journal of the Association of Official Analytical Chemists*, 1964, vol. 47 (2), 387